# EUROPÄISCHE PATENTANMELDUNG

(11) **EP 4 606 270 A2**
(43) Veröffentlichungstag der Anmeldung: **27.08.2025**
(21) Anmeldenummer: 25185801.5
(22) Anmeldetag: 23.04.2021
(51) Int. Cl.: A47F 5/08

(54) **PRODUKTPRÄSENTATIONSVORRICHTUNG MIT ABLAGESTRUKTUR ZUM ABLEGEN VON GEGENSTÄNDEN UND MIT EINEM SENSOR ZUM ERFASSEN DES WARENBESTANDS**

(62) Teilanmeldung aus: 21723649.6
(71) Anmelder: VusionGroup Deutschland GmbH, 77955 Ettenheim (DE)
(72) Erfinder: SCHWARZ, Thomas, 77749 Hohberg (DE); UNMÜSSIG, Michael, 77955 Ettenheim (DE)
(74) Vertreter: Schneider, Michael

(57) **Zusammenfassung**

Die Erfindung betrifft eine Produktpräsentationsvorrichtung (1), die aufweist: zumindest einen Sensor (2) mit einem Erfassungsbereich (14) zum Erfassen eines Gegenstandes (10a-10o) innerhalb des Erfassungsbereichs (14), insbesondere durch Abstandsmessung zwischen dem Sensor (2) und dem Gegenstand (10a-10o), und zumindest eine Ablagestruktur (7) zur Ablage des Gegenstandes (10a-10o), wobei die Ablagestruktur (7) einen hinteren Rand (12) und einen vorderen Rand (11) aufweist, wobei der Erfassungsbereich (14) des Sensors (2) entlang der Richtung vom hinteren Rand (12) zum vorderen Rand (11) hin orientiert ist, wobei ein Sensorbewegungssystem (17) vorgesehen ist, mit dessen Hilfe ein Sensor (2) entlang des hinteren Randes (12) bewegbar ist, und eine Produktführungsstruktur (8a-8f) vorgesehen ist, die zur Führung des Gegenstands (10a-10o) hin zum vorderen Rand (11) vorgesehen ist, wobei die Produktführungsstruktur (8a-8f) derart ausgebildet ist, dass entweder die Produktführungsstruktur (8a-8f) vom jeweiligen Sensor (2) unmittelbar erfassbar ist, oder das unmittelbare Erfassen des geführten Gegenstands (10a-10o) durch den Sensor (2) ermöglicht ist.

## Beschreibung

### Technisches Feld

Produktpräsentationsvorrichtung mit Ablagestruktur zum Ablegen von Gegenständen und mit einem Sensor zum Erfassen des Warenbestands.

### Hintergrund

Aus der DE102017104041A1 ist eine Produktpräsentationsvorrichtung zum Vorschub von Waren bekannt. Die Produktpräsentationsvorrichtung hat ein Fach zur Bevorratung mehrerer Waren, wobei aus dem Fach an einem Entnahmebereich eine oder mehrere Waren entnehmbar sind, und auf der zum Entnahmebereich gegenüberliegenden Seite ein durch eine Feder vorgespannter Schieber an einer der Waren anliegt, und bei Entnahme einer Ware in Vorschubrichtung bewegt wird, wobei ein Sensor zur Erfassung des Warenbestandes vorgesehen ist und wobei an dem Schieber ein Bewegungssensor angeordnet ist, mittels dem eine Bewegung des Schiebers detektierbar ist, um bei einer Bewegung des Schiebers mindestens eine Messung zur Erfassung des Warenbestandes vorzunehmen.

Diese Vorrichtung hat sich als nachteilig erwiesen, weil zum Erfassen des Warenbestandes eines Regals viele solche Vorrichtungen, mit vielen bewegten Sensoren benötigt werden. Ein Regalsystem, das solche Vorrichtungen verwendet, ist daher durch die Anwesenheit mehrerer unkoordiniert bewegter Sensoren und der dafür notwendigen jeweiligen Mechanik sehr komplex und teuer.

Werden mehr solche Vorrichtungen verwendet, steigt nicht nur die Komplexität des Systems, sondern auch die Anzahl der benötigten Komponenten und somit die Kosten für das System zumindest linear mit der Anzahl der verwendeten Vorrichtungen. Die Vorrichtung bzw. ein System, das diese Vorrichtungen verwendet, ist daher schlecht skalierbar.

Die Erfindung hat sich daher die Aufgabe gestellt, eine verbesserte Produktpräsentationsvorrichtung bereitzustellen, bei der die vorangehend erörterten Probleme überwunden sind.

### Zusammenfassung der Erfindung

Diese Aufgabe wird durch eine Produktpräsentationsvorrichtung gemäß Anspruch 1 gelöst. Der Gegenstand der Erfindung ist daher eine Produktpräsentationsvorrichtung, die aufweist: zumindest einen Sensor mit einem Erfassungsbereich zum Erfassen eines Gegenstandes innerhalb des Erfassungsbereichs, insbesondere durch Abstandsmessung zwischen dem Sensor und dem Gegenstand, und zumindest eine Ablagestruktur zur Ablage des Gegenstandes, wobei die Ablagestruktur einen hinteren Rand und einen vorderen Rand aufweist, wobei der Erfassungsbereich des Sensors entlang der Richtung vom hinteren Rand zum vorderen Rand hin orientiert ist, wobei ein Sensorbewegungssystem vorgesehen ist, mit dessen Hilfe ein Sensor entlang des hinteren Randes bewegbar ist, und eine Produktführungsstruktur vorgesehen ist, die zur Führung des Gegenstands hin zum vorderen Rand vorgesehen ist, wobei die Produktführungsstruktur derart ausgebildet ist, dass entweder die Produktführungsstruktur vom jeweiligen Sensor unmittelbar erfassbar ist oder das unmittelbare Erfassen des geführten Gegenstands durch den Sensor ermöglicht ist.

Die Ausbildungsform, in welcher ein Sensorbewegungssystem vorgesehen ist, mit dessen Hilfe ein Sensor entlang des hinteren Randes bewegbar ist, und eine Produktführungsstruktur vorgesehen ist, die zur Führung des Gegenstands hin zum vorderen Rand vorgesehen ist, wobei die Produktführungsstruktur derart ausgebildet ist, dass entweder die Produktführungsstruktur vom jeweiligen Sensor unmittelbar erfassbar ist oder das unmittelbare Erfassen des geführten Gegenstands durch den Sensor ermöglicht ist, wird nachfolgend als Ausbildungsform c) bezeichnet.

Offenbart wird weiters eine Produktpräsentationsvorrichtung, die aufweist: zumindest einen Sensor mit einem Erfassungsbereich zum Erfassen eines Gegenstandes innerhalb des Erfassungsbereichs, insbesondere durch Abstandsmessung zwischen dem Sensor und dem Gegenstand, und zumindest eine Ablagestruktur zur Ablage des Gegenstandes, wobei die Ablagestruktur einen hinteren Rand und einen vorderen Rand aufweist, wobei der Erfassungsbereich des Sensors entlang der Richtung vom hinteren Rand zum vorderen Rand hin orientiert ist, wobei
- entweder gemäß einer Ausbildungsform a) ein Sensorbewegungssystem vorgesehen ist, mit dessen Hilfe ein Sensor entlang des hinteren Randes bewegbar ist,
- oder gemäß einer Ausbildungsform b) entlang des hinteren Randes individuell positionierte Sensoren vorgesehen sind und korrespondierend zu der Position des jeweiligen Sensors eine Produktführungsstruktur vorgesehen ist, die zur Führung des Gegenstands hin zum vorderen Rand vorgesehen ist, wobei die Produktführungsstruktur derart ausgebildet ist, dass entweder die Produktführungsstruktur vom jeweiligen Sensor unmittelbar erfassbar ist oder das unmittelbare Erfassen des geführten Gegenstands durch den Sensor ermöglicht ist,
- oder gemäß einer Ausbildungsform d) entlang des hinteren Randes zumindest ein Sensor, optional auch zumindest eine Produktführungsstruktur gemäß der Ausbildungsform c), vorgesehen ist, wobei der zumindest eine Sensor einen variablen Öffnungswinkel seines Erfassungsbereiches aufweist.

Mit den erfindungsgemäßen Maßnahmen geht daher der Vorteil einher, dass die Positionierung des Sensors am hinteren Rand der Ablagestruktur bzw. benachbart zum hinteren Rand eine wesentlich vereinfachte Realisierung der Produktpräsentationsvorrichtung ermöglicht.

So ist konkret bei der Ausbildungsform gemäß Punkt a) nur ein einziges Sensorbewegungssystem nötig, um die Erfassung von Gegenständen mit nur einem einzigen damit bewegten Sensor oder auch mehreren damit bewegten Sensoren durchzuführen.

Weiterhin ist konkret bei der Ausbildungsform gemäß Punkt b) überhaupt kein Sensorbewegungssystem nötig, um die Erfassung von Gegenständen mit einer Vielzahl von korrespondierend zu Produktführungsstrukturen fix positionierten Sensoren durchzuführen.

Weiterhin ist konkret bei der Ausbildungsform gemäß dem Punkt c) trotz der Existenz der Produktführungsstruktur nur ein einziger Sensor oder eine geringere Anzahl an Sensoren als Produktführungsstrukturen nötig, um die Erfassung durchzuführen.

Weiterhin ist konkret bei der Ausbildungsform gemäß Punkt d) mit Hilfe des einstellbaren Öffnungswinkels erreicht, dass dieser an die Gegebenheiten der Sollplatzierung der Gegenstände bzw. Gegenstandsgruppen anpassbar ist. Damit kann z.B. bei nur einer linienförmigen Platzierung von Gegenständen derselbe Gruppe entlang der Richtung vom hinteren Rand zum vorderen Rand hin ein schmaler Öffnungswinkle gewählt bzw. eingestellt werden, um diese Gegenstände zu erfassen. Auch kann bei einer in die Breite - also quer zur Richtung vom hinteren Rand zum vorderen Rand hin verlaufenden - Platzierung von Gegenständen derselben Gruppe, die also hintereinander wie auch nebeneinander platziert sein können, ein weiterer Öffnungswinkel gewählt bzw. eingestellt werden. Damit können sowohl schmale Ablagestrukturen bzw. schmale Produktführungsstrukturen wie auch breitere Ablagestrukturen bzw. breitere Produktführungsstrukturen dahingehend geprüft werden, ob sich dort überhaupt Produkte befinden oder ob dort keine Produkte mehr vorhanden sind.

In einer bevorzugten Ausführungsform kann die Weite des Öffnungswinkels des Erfassungsbereiches softwarebasiert eingestellt werden. Hierfür kann der Sensor z.B. mit einem optoelektronischen Erfassungssystem ausgerüstet sein, das eine optische Linsenkonfiguration (eine oder mehrere Linsen, ggf sogar mit Autofokusfunktion) und ein benachbartes Sensorarray aufweist, auf welches die Linsenkonfiguration ein Abbild der erfassten Umgebung abbildet. Durch softwarebasierte selektive Aktivierung (Miteinbeziehung) oder Deaktivierung (Auslassung) von Elementen des Sensorarrays (insbesondere der Randbereiche) bei der Erfassung lässt sich der Öffnungswinkel an den jeweiligen zu erfassenden Schauplatz anpassen.

Die Weite des Öffnungswinkels kann je nach Anforderung ringförmig oder auch entlang einer Funktion verlaufend veränderbar sein oder in unterschiedlichen Richtungen individuell, also unabhängig voneinander einstellbar sein. So kann z.B. eine erste Weite des Öffnungswinkels in der Ebene oder parallel zu der Ebene der Ablagestruktur von Sensor zu Sensor unterschiedlich und an die individuell zu erfassende Gegenstandsgrößen oder auch deren Gruppierung, im Allgemeinen deren Stellplätze bzw. die Ausdehnung der Stellplätze, angepasst sein. Demgegenüber kann für alle installierten Sensor oder zumindest für eine Gruppe dieser Sensoren eine zweite Weite des Öffnungswinkels in einer zu der Ebene der Ablagestruktur quer verlaufenden Ebene identisch eingestellt sein. Somit können unterschiedlich breite Bereiche in einem Regal von unterschiedlichen Sensoren überwacht werden, wohingegen der Abstand zwischen Regalböden nicht in die Erfassung einfließt, weil die Regalböden durch die relativ gering (schmal) eingestellte zweite Weite nicht erfasst werden.

Der Vollständigkeit wegen sei an dieser Stelle bereits erwähnt, dass alle der vorangehend erörterten Ausbildungsformen a), b) und c) mit einem Sensor mit variablem Öffnungswinkel des Erfassungsbereiches ausgerüstet sein können.

Die Vorrichtung ist also wegen der Reduktion auf das absolut Notwendige Sensor-Equipment am hinteren Rand bzw. benachbart dazu ausgezeichnet skalierbar. Insbesondere muss wegen der Platzierung der Sensoren ausschließlich am hinteren Rand bzw. benachbart zu diesem hinteren Rand bei der Platzierung der Gegenstände keine Rücksicht auf die Sensoren genommen werden.

Die Produktpräsentationsvorrichtung kann als eigenständige Vorrichtung realisiert sein, die beispielsweise in einem Regal platziert wird. Die Produktpräsentationsvorrichtung kann jedoch auch ein Regalreihe bzw. einen Regaletage oder ein ganzes Regal bilden.

Der Erfassungsbereich des Sensors kann sich je nach Sensorart und Ausführung unterscheiden und beispielsweise linienartig, zylindrisch, kegelförmig oder auch keulenförmig sein, insbesondere jedoch hinsichtlich seiner Weite softwarebasiert modellierbar sein, wie vorangehend erörtert. Die Orientierung des Erfassungsbereichs des Sensors ist dabei immer, also in allen Ausbildungsformen gemäß Punkt a) bis Punkt d) vom Sensor hin zum vorderen Rand orientiert, sodass ein sich zwischen dem hinteren Rand und dem vorderen Rand befindlicher Gegenstand erfassbar ist.

Grundsätzlich kann sich die Aufgabe des Sensors darauf beschränken, nur festzustellen, ob ein Gegenstand innerhalb seines Erfassungsbereiches vorhanden ist oder eben nicht vorhanden ist. Dies kann dazu genutzt werden, festzustellen, ob die Ablagestruktur leer ist oder ob sich noch ein oder mehrere Gegenstände auf der Ablagestruktur befinden. Soll jedoch der Warenbestand auf der Ablagestruktur erfasst werden, hat es sich als besonders vorteilhaft erwiesen, dass der Sensor zur Abstandsmessung zwischen dem Sensor und dem Gegenstand ausgebildet ist. Über die Abstandsmessung kann durch Kenntnis der Abmessungen der Gegenstände auf die Anzahl der Gegenstände in der Ablagestruktur geschlossen werden. Ganz allgemein sei an dieser Stelle bereits erwähnt, dass die Abstandsmessung auch auf der Erfassung einer Positionsänderung des erfassten Gegenstandes oder auch einer Geschwindigkeit oder Beschleunigung, die im Zusammenhang mit dem Gegenstand festgestellt wird, basieren kann.

Der Gegenstand kann ein Produkt oder eine Ware als solche sein.

Die Ablagestruktur kann beispielsweise ein Regalboden oder auch ein Verkaufstisch zur Präsentation von Gegenständen sein.

Der hintere und der vordere Rand bilden hierbei die Abgrenzung des Ablagebereichs, in dem der eine oder mehrere Gegenstände abgelegt werden. Auch können vor dem vorderen Rand bzw. hinter dem hinteren Rand weitere Strukturelemente der Produktpräsentationsvorrichtung mit anderen Aufgaben vorhanden sind. So kann vor dem vorderen Rand beispielsweise noch eine Regalschiene zum Anbringen von Regaletiketten vorhanden sein und hinter dem hinteren Rand eine Befestigungs- oder Tragestruktur vorgesehen sein.

Das Sensorbewegungssystem gemäß Ausbildungsform a) kann beispielsweise so ausgebildet sein, dass es nur einen Sensor oder eine Anzahl von Sensoren entlang des hinteren Randes der Ablagestruktur bewegt und dabei, also während der Bewegung, die Erfassung durch den Sensor erfolgt. Die Erfassung kann dabei im Wesentlichen quasi-kontinuierlich erfolgen oder von dort aus an unterschiedlichen diskreten Positionen durchgeführt werden. So kann bei der Verwendung der Produktpräsentationsvorrichtung als Bestandteil eines Regals oder als Regal der Lagerbestand eines Regalbodens mit nur einem Sensor oder einer geringen Anzahl von Sensoren erfasst werden. Weiterhin kann das Sensorbewegungssystem auch derart ausgebildet sein, dass es die zuvor erörterte Bewegung für einen einzigen Sensor oder eine Gruppe von Sensoren entlang des hinteren Randes einer Anzahl von Ablagestrukturen ermöglicht, die z.B. nebeneinander der und/oder auch übereinander angeordnet sein können.

Weitere, besonders vorteilhafte Ausgestaltungen und Weiterbildungen der Erfindung ergeben sich aus den abhängigen Ansprüchen sowie der nachfolgenden Beschreibung.

Die Produktpräsentationsvorrichtung bzw. die Befestigung des Sensors an ihr kann so ausgebildet sein, dass der Erfassungsbereich des Sensors im Wesentlichen nur einen kleinen Bereich der Ablagestruktur erfassen kann, und mit Hilfe des Sensors daher nur überprüft werden kann, ob in diesem Bereich ein Gegenstand oder ein Teil der Produktführungsstruktur vorhanden ist. Die Erfassung eines solchen kleinen Bereichs reicht beispielsweise aus, um festzustellen, ob die Ablagestruktur mutmaßlich bis zu ihrem hinteren Rand mit Gegenständen angefüllt ist, oder ob ein davon abweichender Warenbestand vorliegt.

Um mehr Informationen, über die Anzahl bzw. Menge der Gegenstände in der Ablagestruktur zu erhalten, hat es sich als vorteilhaft erwiesen, wenn die Produktpräsentationsvorrichtung so ausgebildet ist, dass ein größerer Bereich der Ablagestruktur, insbesondere von ihrem hinteren Rand bis hin zu ihrem vorderen Rand, durch den mindestens einen Sensor erfassbar ist.

Es ist daher vorteilhaft, wenn die Ablagestruktur eine von der Horizontalen abweichende Neigung aufweist, und der Sensor derart orientiert ist, dass sein Erfassungsbereich im Wesentlichen der Neigung der Ablagestruktur folgt. Erst diese im Wesentlichen der Orientierung der Ablagestruktur folgende Ausrichtung des Erfassungsbereichs des Sensors stellt eine ungehinderte Erfassung von Gegenständen entlang der Ablagestruktur von ihrem hinteren Rand bis hin zu ihrem vorderen Rand sicher. Dies bildet die Grundlage für eine zuverlässige Warenbestandserfassung. Die Orientierung des Erfassungsbereichs des Sensors bezogen auf die Orientierung der Ablagestruktur lässt sich beispielsweise über die Neigung, in welcher der Sensor montiert ist, oder durch den inneren Aufbau des Sensors, wie etwa seinen variabel justierbaren Öffnungswinkel, einstellen bzw. definieren.

Die Neigung der Ablagestruktur kann hierbei so gewählt werden, dass beim Herausnehmen eines Gegenstandes die dahinter bzw. darüber befindlichen Gegenstände bzw. ein dahinter bzw. darüber befindlicher Gegenstand nachrutscht bzw. nach vorne gleitet oder nachrollt.

Der mindestens eine Sensor kann auf unterschiedliche Art und Weise für die direkte oder indirekte Abstandsmessung (wie erwähnt über Geschwindigkeits- oder Beschleunigungsmessung und Rückrechnung) ausgelegt sein. So kann der Sensor auch derart ausgebildet sein, dass mit ihm über Triangulation eine Abstandsmessung durchführbar ist.

Bevorzugt ist der Sensor jedoch zur Laufzeitmessung ausgebildet. Dabei wird durch die Messung der Laufzeit eines von ihm ausgesandten Signals (Funk oder Licht) der Abstand zu einem, das Signal reflektierenden Objekts bzw. Gegenstands bestimmt.

Die Verwendung eines zur Laufzeitmessung ausgebildeten Sensors erlaubt eine definierte Auslegung des Erfassungsbereichs, der sogar im Wesentlichen linienförmig sein kann und somit möglichst präzise orientiert werden kann.

Der Sensor generiert bei seiner Erfassung Erfassungsdaten, die bevorzugt die Entfernung zwischen dem Sensor und dem erfassten Objekt bzw. Gegenstand repräsentieren.

Der Sensor kann seine Erfassungsdaten kabelgebunden weitergeben bzw. abgeben. Auch können mehrere Sensoren einer

Produktpräsentationsvorrichtungen oder auch mehrere Sensoren von mehreren Produktpräsentationsvorrichtungen ihre Erfassungsdaten kabelgebunden an ein separates Funkmodul übermitteln, wobei dieses Funkmodul dazu ausgebildet ist, die Erfassungsdaten kabellos weiterzuleiten. Das Funkmodul überträgt also die Erfassungsdaten einer Gruppe von Sensoren einer oder unterschiedlicher Produktpräsentationsvorrichtungen. Eine solche Gruppe kann beispielsweise aus den
Produktpräsentationsvorrichtungen, die jeweils eine Regalreihe bilden, oder aus Produktpräsentationsvorrichtungen, die sich jeweils in einer Regalreihe oder jeweils in einem Regal befinden, gebildet sein.

Gemäß einer bevorzugten Ausbildungsform ist der Sensor dazu ausgebildet, seine Erfassungsdaten, die das Erfassen des Gegenstands repräsentieren, funkbasiert abzugeben. Besonders bevorzugt weist der Sensor selbst ein (integriertes) Funkmodul auf.

Dies erlaubt allgemein eine einfache und flexible Installation und Wartung der Produktpräsentationsvorrichtung, weil keine Kabel, die den Sensor mit einem externen Funkmodul verbinden würden, verlegt werden müssen.

Insbesondere bei der Verwendung eines Sensorbewegungssystems kann so auf eine komplexe Kabelführung, beispielsweise mittels Energieführungskette, verzichtet werden, womit die Vorrichtung schlanker dimensioniert werden kann und zudem auch weniger fehleranfällig ist.

Die Verarbeitung der Erfassungsdaten kann nach ihrer Übertragung an ein externes Verarbeitungsgerät dort extern erfolgen. Analog zum separaten Funkmodul kann das externe Verarbeitungsgerät auch die Erfassungsdaten einer Gruppe von Sensoren verarbeiten. Das externe Verarbeitungsgerät kann natürlich auch dazu ausgebildet sein, den bzw. die Sensoren anzusteuern oder auch andere Daten als die Erfassungsdaten mit den Sensoren auszutauschen. So können z.B. auch Einstellungsdaten zur Justierung der Weite des Öffnungswinkels übermittelt werden.

Die Verarbeitung der Erfassungsdaten kann jedoch auch in einem internen Verarbeitungsmodul des Sensors erfolgen, wonach von dem Sensor bereits vorverarbeitete Erfassungsdaten abgegeben werden.

Das interne Funkmodul kann dazu ausgebildet sein, die Erfassungsdaten als Rohdaten oder vorverarbeitet beispielsweise über ein Wireless Local Area Network (WLAN / WIFI) oder über eine Mesh-Netzwerk-Konfiguration abzugeben. Auch können andere de-facto standardisierte Kommunikationsprotokolle wie z.B. ZigBee oder BlueTooth zur Anwendung kommen. Auch kann vorgesehen sein, dass die Sensoren mit einem 4G- oder 5G-Funkmodul ausgerüstet sind, um ihren Funkverkehr über ein (öffentliches) Mobilfunknetzwerk abzuwickeln und als IoT-Geräte zu fungieren (IoT steht hier für Internet-of-Things). Auch kann ein separates 4G- oder 5G-fähiges Funkgerät als Access-Point für die Sensoren dienen, die mit diesem Access-Point via Funk oder kabelgebunden in Verbindung stehen. Natürlich können auch andere Geräte, die zur Infrastruktur eines Warenwirtschafssystems bzw. eines Regal-Logistiksystems gehören als IoT-Hub für die Sensoren dienen. Hierfür können z.B. Kameras zum Einsatz kommen, mit deren Hilfe Regale abgefilmt werden. Diese Kameras weisen die 4G- bzw. 5G-Mobilfunkfähigkeit auf und kommunizieren mit den Sensoren gemäß einem anderen Kommunikationsprotokoll, bevorzugt funkbasiert.

Für die funkbasierte Anbindung der Sensoren kann natürlich auch ein proprietäres Kommunikationsverfahren bzw. Kommunikationsprotokoll zur Anwendung kommen, wie dies z.B. aus der PCT/EP2014/053376 bekannt ist, wobei deren Offenbarung in Bezug auf das dort erörterte Zeitschlitzkommunikationsverfahren durch Bezugnahme aufgenommen ist. Im Unterschied zu dem in der PCT/EP2014/053376 offenbarten System wird hier jedoch dieses Zeitschlitzkommunikationsverfahren zur Kommunikation zwischen einem Sensor-Accesspoint und einer Gruppe diesem Sensor-Accesspoint zugeordneten Sensoren genutzt. Dieses proprietäre Kommunikationsverfahren erlaubte einen extrem energiesparenden Betrieb der Sensoren, allerdings zu Lasten der Verfügbarkeit der Sensoren. Der Sensor wechselt nämlich nur sehr selten von seinem Schlafmodus in seinen Aktivmodus, um funktechnisch verfügbar zu sein. In diesem Aktivmodus kann der Sensor auch eine oder mehrere Erfassungen durchführen. Die dabei generierten Erfassungsdaten können dann im Laufe der Zeit unter Verwendung des proprietären Kommunikationsverfahrens abgegeben werden.

Um eine höhere Verfügbarkeit der Sensoren sicherzustellen, können die Sensoren auch mit einem zusätzlichen Aufweckempfänger ausgerüstet sein, sodass sie durch ein von einem Aufwecksender abgegebenes (ggf. auch adressiertes) Aufwecksignal aktivierbar sind, um dann im Aktivmodus eine Erfassung durchzuführen, ohne jedoch funktechnisch verfügbar zu sein und dann wieder in den energiesparenden Schlafmodus einzutreten, bis dass sie wieder gemäß dem Zeitraster des proprietären Kommunikationsverfahrens funktechnisch verfügbar sind. Das Aufwecksignal hat hierbei die Wirkung eines externen Trigger-Signals, um den jeweiligen Sensor in den Aktivmodus zu versetzten.

Weiterhin, insbesondere unabhängig von der Wahl des Kommunikationsverfahrens bzw. der zur Anwendung kommenden Kommunikationstechnologie, kann der Energieverbrauch des Sensors verbessert werden, wenn der Sensor dazu ausgebildet ist, nur zu gewissen Zeiten Erfassungen bzw. Messungen vorzunehmen.

So kann der Sensor gemäß einer bevorzugten Ausbildungsform dazu ausgebildet sein, eine Erfassung zyklisch, insbesondere periodisch, durchzuführen. Zu diesem Zweck kann er eine Timer-Elektronik aufweisen. Der Sensor kann also beispielsweise alle 5 Minuten oder jede Stunde eine Erfassung durchführen. Auch können Erfassungen in nicht-periodischen, also ungleichmäßig langen Zeitabständen, durchgeführt werden. So kann beispielsweise bei einer in einem Geschäftslokal verbaute Produktpräsentationsvorrichtung vorgesehen sein, dass ihr(e) Sensor(en) dazu ausgebildet sind, in jener Zeit, in der sich typischerweise viele Kunden im Geschäftslokal befinden, sekündlich Erfassungen bzw. Messungen durchzuführen, und in jenen Zeiten, in denen üblicherweise wenige Kunden im Geschäftslokal sind, nur z.B. nur alle 15 Minuten solche Erfassungen bzw. Messungen durchzuführen. So können Veränderungen z.B. in einem Regal periodisch erfasst werden. Es ist auch möglich, dass die Erfassung in zufälligen Abständen innerhalb eines Zeitbereichs oder verteilt über die Öffnungszeit eines Geschäftslokals oder verteilt über den Tag erfolgen. So können beispielsweise über einen längeren Zeitraum verteilt auftretende Veränderungen in einem Regal ohne Dringlichkeit, jedoch energiesparend erfasst werden.

Der Sensor kann gemäß einer bevorzugten Ausbildungsform auch dazu ausgebildet sein, ein Erfassungssteuersignal zu empfangen und als Folge davon eine Erfassung durchzuführen.

So ein Erfassungssteuersignal kann beispielsweise von einem anderen Sensor stammen. Darunter kann auch eine Kamera, ein Bewegungssensor oder ein Temperatursensor zu verstehen sein, die als externe Trigger für die Auslöser eines Erfassungsvorgangs wirken. Diese Sensoren müssen nicht zwingend alle an ein und derselben Produktpräsentationsvorrichtung vorgesehen sein. Das Erfassungssteuersignal kann auch von einer weiteren, beispielweise von einer benachbarten Produktpräsentationsvorrichtung stammen. So kann der Sensor eine Erfassung durchführen, wenn bei einem benachbarten oder logisch verknüpften Sensor einer anderen Produktpräsentationsvorrichtung das Erfassungssteuersignal generiert und an ihn übermittelt wird. Umgekehrt betrachtet ist ein solcher Sensor also dazu ausgebildet, ein Erfassungssteuersignal an die benachbarten oder logisch verknüpften anderen Sensoren (sei es nun ein Sensor an ein und derselben Produktpräsentationsvorrichtung oder an einer anderen Produktpräsentationsvorrichtung) zu übermitteln. Ein Auslöser dafür kann bei dem das Erfassungssignal aussendenden Sensor z.B. die Erfassung einer Entnahme oder eine Änderung des in der Ablagestruktur abgelegten Gegenstandes sein. Die Übermittlung des Erfassungssteuersignals kann direkt über kabelgebundene oder funkbasierte Kommunikation zwischen den Sensoren oder über eine übergeordnete Verwaltungsinstanz erfolgen.

Das Erfassungssteuersignal kann auch von einer übergeordneten Verwaltungsinstanz, wie beispielsweise von einem Server oder von einer cloudbasierten Software, losgelöst von dem zuvor erörterten Szenario bereitgestellt werden.

Auch kann vorgesehen sein, dass die zyklische, die nicht-zyklische und die Erfassungen zufolge eines Erfassungssteuersignals in einer gemeinsamen Ausbildungsvariante zur Verfügung stehen.

Gemäß einem weiteren Aspekt kann der Sensor einen Bildschirm aufweisen, um Sensoridentifikationsdaten oder Produktidentifikationsdaten oder Statusinformationen und dergleichen anzuzeigen.

Die Sensoridentifikationsdaten oder Produktidentifikationsdaten können beispielsweise durch eine Nummer oder eine alphanumerische Zeichenfolge, einen Strichcode oder einen QR-Code (QR steht hier für Quick Response) repräsentiert sein. Sensoridentifikationsdaten erlauben die Identifikation eines bestimmten Sensors und/oder einer bestimmten Produktpräsentationsvorrichtung.

Produktidentifikationsdaten erlauben die Identifikation eines Produkts. Ganz allgemeine sei hier noch erwähnt, dass ein Produkt in mehreren Produktpräsentationsvorrichtungen verteilt platziert sein kann. Über die Produktidentifikationsdaten ist auch eine einfache Abfrage des Lagerstandes möglich.

Für die Abfrage der Sensoridentifikationsdaten oder Produktidentifikationsdaten kann ein zusätzliches externes Gerät oder auch eine Applikation, die beispielsweise auf einem Mobiltelefon installiert ist, Anwendung finden. Durch Scannen des Strichcodes, des QR-Codes oder der Nummer mittels des externen Geräts oder mittels des Mobiltelefons oder durch Eingabe der Nummer in das externe Gerät oder in das Mobiltelefon, können Informationen zur Produktpräsentationsvorrichtung oder zum Sensor, wie z.B. Akkuladezustand, bei Verwendung von Akkus, oder die Stärke des Funksignals, aber auch der erfasste Abstand und der daraus ermittelte Bestand an Gegenständen ermittelt werden. Insbesondere kann festgestellt werden, welchem Produkt der betreffende Sensor zugeordnet ist. Diese Abfrage kann auch mit Hilfe von Near-Field-Communication (abgekürzt NFC) erfolgen, wenn der Sensor und das abfragende Gerät dafür ausgebildet sind.

Der Sensor bzw. dessen Sensoridentifikationsdaten können in einer Datenbank mit einem Produkt bzw. dessen Produktidentifikationsdaten verknüpft sein, sodass über die Abfrage in Erfahrung gebracht werden kann, ob sich das betreffende Produkt in der korrekten Produktpräsentationsvorrichtung befindet.

Der Bildschirm kann als LCD-Bildschirm oder als energiesparender "E-Paper"-Bildschirm usw. realisiert

Weiterhin kann der Sensor gemäß einer bevorzugten Ausbildungsform eine Eingabeeinheit, insbesondere einen Knopf, zum Auslösen einer Sensorfunktion, bevorzugt einer Produktabfrage, besonders bevorzugt einer Echtzeit-Lagerstandabfrage, aufweisen.

Eine solche Eingabeeinheit kann ein Schalter, ein Hebel oder ein Taster, insbesondere ein Knopf sein. Die Eingabeeinheit kann auch als ein "kontaktfreier" Knopf realisiert sein, was sich durch besagte NFC-Funktionalität realisieren lässt.

Bei der auszulösenden Sensorfunktion kann es sich im einfachsten Fall um die Auslösung eines Erfassungsvorgangs durch den Sensor handeln.

Ist der Sensor zusätzlich mit einem Temperaturfühler bzw. einem eigenen Temperatursensor ausgerüstet, kann es sich bei der Sensorfunktion beispielsweise um eine Temperaturabfrage handeln, sodass einfach überprüft werden kann, ob die Temperatur bei der Produktpräsentationsvorrichtung für den entsprechenden Gegenstand angemessen ist. Der Temperatursensor kann aber auch separat von dem Sensor realisiert sein und seine Daten an den Sensor übermitteln.

Bei der Sensorfunktion kann es sich auch um eine Produkt- oder Produktstatusabfrage handeln, sodass mittels Betätigung der Eingabeeinheit eine erörterte Produktabfrage durchgeführt werden kann. Neben Informationen, wie die Produktidentifikationsdaten, die genaue Bezeichnung, sowie eine eventuelle Beschreibung des Produkts und eventuelle zusätzliche Hinweise, können die Produktidentifikationsdaten insbesondere Informationen zum Lagerstand beinhalten, sodass Echtzeitinformation zum Lagerstand vermittelt wird oder eine Echtzeitabfrage des Lagerstands ermöglicht ist

Die abgefragten Daten können hierbei auf das externe Gerät oder das Mobiltelefon übermittelt werden. Alternativ können die Daten auch am Bildschirm angezeigt werden, wenn dieser vorhanden und hierfür ausgebildet ist. Auch können diese Informationen an ein weiteres Gerät, beispielsweise an ein Electronic Shelf Label, kurz ESL bzw. elektronisches Regalschild genannt, übermittelt und von diesem angezeigt werden.

Für die Produktpräsentationsvorrichtung, die gemäß Ausbildungsform a) ein Sensorbewegungssystem aufweisen, hat es sich als besonders vorteilhaft herausgestellt, wenn dieses Sensorbewegungssystem zumindest eine der nachfolgend angeführten Ausbildungen aufweist, nämlich: ein seilzugbasiertes Sensorbewegungssystem, ein riemenbasiertes Sensorbewegungssystem, ein zahnrad- bzw. zahnstangenbasierten Sensorbewegungssystem, ein gewindebasierten Sensorbewegungssystem, ein magnetbasiertes Sensorbewegungssystem.

Auch können diese Ausbildungsformen kombiniert auftreten. So kann beispielsweise ein seilzugbasiertes Sensorsystem oder ein riemenbasiertes Sensorbewegungssystem die horizontale Bewegung bzw. Positionierung des Sensors übernehmen, während ein gewindebasiertes Sensorbewegungssystem die vertikale Bewegung bzw. Positionierung des Sensors übernimmt.

Auch kann das Sensorbewegungssystem dazu ausgebildet sein, eine vertikale Reihe von Sensoren horizontal in der Produktpräsentationsvorrichtung zu bewegen. Alternativ kann das Sensorbewegungssystem dazu ausgebildet sein, eine horizontale Reihe von Sensoren vertikal in der Produktpräsentationsvorrichtung zu bewegen.

Bevorzugt ist das Sensorbewegungssystem derart ausgebildet, dass die Bewegung des Sensors entlang des hinteren Randes der Ablagestruktur durch eine Linearbewegung oder eine Rotationsbewegung oder eine Überlagerung einer Linear- mit einer Rotationsbewegung gegeben ist.

Das Sensorbewegungssystem ermöglicht die Bewegung des Einzelsensor oder einer Gruppe von Sensoren und erweitert damit den Erfassungsbereich des Einzelsensors oder der Gruppe der Sensoren durch einen örtlichen Versatz.

Ein Sensorbewegungssystem stellt einen Bewegungsbereich für den bzw. die Sensoren zur Verfügung. Innerhalb dieses Bewegungsbereichs können jene Positionen, von wo aus das Erfassung der Gegenstände erfolgt, im Wesentlichen kontinuierlich abgefahren werden. Somit können beispielsweise auch bei kleineren Gegenständen oder gar Schüttgut die Abstände zwischen den Gegenständen und dem Sensor an verschiedenen Stellen erfasst werden. Aus diesen Erfassungsdaten lässt sich also auch bei kleinen Gegenständen die ungefähre Menge abschätzen bzw. darauf zurückrechnen.

In vielen Fällen, insbesondere bei linearer Anordnung der Gegenstände in Richtung vom hinteren Rand zum vorderen Rand der Ablagestruktur, ist jedoch genau ein Abstand vom hintersten, also sensornahestehen Gegenstand zum Sensor interessant. Im Unterscheid zu der zuvor erwähnten quasi-kontinuierlichen Bewegung kann es in solchen diskreten, linearen Abordnungen von Vorteil sein, wenn das Sensorbewegungssystem den oder die Sensoren im Wesentlichen schrittweise von einer Erfassungsposition zur nächsten Erfassungsposition bewegt, also zwischen den diskreten Erfassungspositionen möglichst rasch bewegt.

Hier hat es sich also als besonders vorteilhaft herausgestellt, wenn das Sensorbewegungssystem derart ausgebildet ist, dass der Sensor an diskreten Positionen positionierbar ist.

Dies kann beispielsweise über die Steuerung oder mittels einer entsprechenden mechanischen oder auch elektro-magnetischen Ausführung des Sensorbewegungssystems realisiert sein.

Sind beispielsweise mehrere Gegenstände in einer Linie (Anordnungslinie) von hinten nach vorne in die Ablagestruktur abgelegt, gibt der Abstand des hintersten Gegenstands zum Sensor, wenn sich der Sensor in der genannten Linie befindet, ein Maß an, das einen Rückschluss auf die maximale Anzahl an Gegenständen in der Ablagestruktur zulässt. Dies trifft insbesondere dann zu, wenn die in Linie angeordneten Gegenstände eine zylindrische Form aufweisen und die Zylinderachse normal auf die Anordnungslinie der Gegenstände verläuft, wie es bei hintereinander angeordneten Getränkedosen der Fall ist. Die Abstände, die in der unmittelbaren Umgebung der Gegenstände bzw. unmittelbar benachbart zu deren Anordnungslinie gemessen würden, sind nicht sonderlich interessant und stellen Daten bereit, die in vielen Fällen stören, weil es keine Verwendung für sie gibt und sie das Kommunikationsnetz bzw. das Funknetz nur unnötig auslasten, wie auch die Energieversorgung des Sensors nur unnötig belasten.

Ein Sensorbewegungssystem, das den Sensor an diskreten Positionen positioniert, wie z.B. korrespondierend zur erwähnten Anordnungslinie, trägt also nicht nur zur Optimierung des Energieverbrauchs, sondern auch zur Minimierung des Datenaufkommens und damit zur effizienten Nutzung des Kommunikationsmediums bei.

Eine spezielle Ausbildungsform des Sensorbewegungssystems weist eine erste Magnetkomponente auf, die mit dem Sensor mitbewegbar ausgebildet ist, und eine zweite Magnetkomponente auf, die relativ zur Ablagestruktur unbeweglich ausgebildet ist, und wobei mindestens eine der Magnetkomponenten als schaltbarer Elektromagnet ausgebildet ist.

Dies erlaubt das Sensorbewegungssystem sehr platzsparend und mit wenigen bis gar keinen beweglichen Komponenten zu realisieren. Durch einfaches Polumschalten des oder der Elektromagnete werden Kräfte erzeugt, die es erlauben, den Sensor entlang einer Schiene, die vereinzelte Magnete aufweist, zu verschieben oder zu versetzen. Dies kann dadurch begünstigt sein, dass das Gehäuse eine im Wesentlichen flächige Außenhülle aufweist, die ein Kippen des Sensors durch Magnetkrafteinwirkung verhindert und gleichzeitig ein Dahinrutschen ermöglicht.

Das Gehäuse, insbesondere seine Flächen, und die Anordnung der Magnete entlang des Umfangs des Gehäuses können jedoch auch so ausgelegt sein, dass der Sensor unter Magnetkrafteinwirkung von einer Gehäusefläche zur nächsten kippt und so weiterbewegt wird. Natürlich kann das Gehäuse auch umfangsseitig so gestaltet sein, dass unter der Magnetkrafteinwirkung ein winkelsegmentweises Rollen entlang des hinteren Randes der Ablagestruktur erfolgt. Dazu können einzelne Magnete entlang des runden Umfangs des Gehäuses im Zentrum der Winkelsegmente positioniert sein. Entlang einer Schiene sind dann die vereinzelt ein bzw. umschaltbaren Elektromagnete installiert, mit deren Hilfe die Rollbewegung veranlasst und die Richtung der Rollbewegung definierbar wird.

Auch kann sich der Sensor auf bzw. in einem Bewegungselement befinden. Die Magnetkomponenten bewegen in dieser Ausbildungsform das Bewegungselement, welches den Sensor mitführt. Ein solches Bewegungselement muss weder rund noch symmetrisch sein, wobei sich runde Ausführungen für eine kontinuierliche Erfassung anbieten, während sich nicht runde Ausführungsformen für die Erfassung an diskreten Positionen anbietet. Das Bewegungselement kann z.B. im Wesentlichen als konvexes Polygon ausgebildet sein.

Grundsätzlich kann die Produktpräsentationsvorrichtung ohne Produktführungsstruktur realisiert sein. In diesem Fall gibt der durch den Sensor erfasste Abstand eines Gegenstandes zum Sensor jedoch nur einen Hinweis auf die (vermutete) maximale Menge der Gegenstände in der Produktpräsentationsvorrichtung an, weil nur jener Gegenstand erfassbar ist, der dem Sensor am nächsten steht. Ob nun in Richtung zum vorderen Rand weitere Gegenstände angeordnet sind, bleibt offen. Dies ist im Übrigen unabhängig davon, ob die Produkte in der erwähnten Anordnungslinie positioniert sind oder gruppenweise oder auch vereinzelt beliebig verteilt auf der Ablagestruktur positioniert sind.

Es ist daher vorteilhaft, wenn eine Produktführungsstruktur vorgesehen ist, die das Produkt oder die Produkte so führt, dass der durch den Sensor erfasste Abstand einen genaueren Hinweis auf die Menge der Gegenstände auf der Ablagestruktur gibt. Führt die Produktführungsstruktur beispielsweise die Gegenstände so, dass sie jeweils miteinander in Kontakt stehend in einer Reihe im Erfassungsbereich positioniert sind, also entlang besagter Anordnungslinie angeordnet sind, lässt sich aus der Kenntnis der Abmessung der Gegenstände und dem Abstand zwischen dem hintersten Gegenstand zum Sensor die Anzahl an Gegenständen zurückrechnen oder zumindest abschätzen.

Gemäß einer bevorzugten Ausbildungsform liegt daher der hintere Rand der Ablagestruktur in Richtung der Fallbeschleunigung oberhalb des vorderen Rands der Ablagestruktur, wobei die Produktführungsstruktur im Bereich des vorderen Rands der Ablagestruktur oder die Ablagestruktur an ihrem vorderen Rand eine Begrenzung aufweist.

Gemäß dieser Ausbildungsform ordnen sich die Gegenstände bedingt durch die Schwerkraft automatisch von der Begrenzung aus in Richtung hinterem Rand, also im Wesentlichen in Richtung des Sensors, an. Wird ein begrenzungsnaher Gegenstand herausgenommen, werden die dahinter befindlichen Gegenstände durch die Produktführungsstruktur so geführt, dass sie sich zu dem freigewordenen Platz hinbewegen. Wenn ein Gegenstand herausgenommen wird, rutschen, gleiten oder rollen die übrigen Gegenstände also nach.

Besagte Begrenzung kann beispielsweise eine einfache Regalschiene sein, die ggf. Papieretiketten oder elektronische Regalschilder trägt, oder auch eine Video-Regalschiene sein, die entlang des vorderen Randes der Ablagestruktur einen Bildschirm für die Videowidergabe aufweist.

Diese platzsparende Produktführungsstruktur hat sowohl ohne wie auch in Kombination mit dem Sensorbewegungssystem Vorteile, weil in beiden Fällen ein genauerer Rückschluss auf die Anzahl bzw. die Menge der Gegenstände in der Ablagestruktur möglich ist.

Weiterhin hat es sich als vorteilhaft erwiesen, wenn die Produktführungsstruktur derart ausgebildet ist, dass mehrere Gegenstände hintereinander entlang einer Linie (der Anordnungslinie), die sich zwischen dem hinteren Rand und dem vorderen Rand der Ablagestruktur erstreckt, platzierbar und führbar sind. Diese Ausbildung kann z.B. auf Führungsleisten oder Führungswänden basieren, die zu beiden Seiten der zu führenden Gegenstände zwischen dem vorderen und dem hinteren Rand der Ablagestruktur verlaufen. Ihr Abstand kann etwas größer als der Durchmesser oder eine andere relevante Abmessung der zu führenden Gegenstände sein.

Bei der Verwendung fix verbauter Sensoren im Bereich des hinteren Rands der Ablagestruktur lassen sich diese ganz einfach so platzieren, dass der Erfassungsbereich des Sensors in seinem Zentrum in etwa dieses Anordnungslinie folgt, also sie im Wesentlichen umhüllt, sodass der Abstand zwischen dem hintersten Gegenstand und dem Sensor im Wesentlichen proportional zur Anzahl bzw. der Menge der Gegenstände in dieser Linie ist.

Bei der Verwendung eines Sensorbewegungssystems kann derselbe Effekt erzielt werden, wenn der zumindest eine Sensor in die entsprechende Position gebracht wird, sodass dessen Erfassungsbereich wie erörtert in Bezug auf die Anordnungslinie ausgerichtet ist.

Es ist hierbei daher besonders vorteilhaft, wenn das Sensorbewegungssystem, wie zuvor erörtert, dazu ausgebildet ist, den Sensor in diskreten Positionen korrespondierend zu den Ausrichtungslinien zu positionieren.

Weiterhin kann die Produktführungsstruktur zum Bewegen eines Gegenstands oder mehrerer Gegenstände hin zum vorderen Rand der Ablagestruktur ausgebildet sein.

So kann die Produktführungsstruktur beispielweise dazu ausgebildet sein, den Gegenstand bzw. die Gegenstände mittels Drückerplatte oder Produktbewegungsspirale zu bewegen.

Eine solche Drückerplatte kann beispielsweise ebenfalls dazu ausgebildet sein, dass sie unter dem Schwerkrafteinfluss Gegenstände zum vorderen Rand der Ablagestruktur bewegen. In den meisten Fällen ist es jedoch vorteilhaft, wenn die Produktpräsentationsvorrichtung einen Produktführungsantrieb aufweist, der beispielsweise die Drückerplatte oder die Produktbewegungsspirale bewegt. Dieser Antrieb kann mit Hilfe eines elektromotorischen Elements oder auch mit Hilfe eines elastischen Elements, wie etwa eine Feder, realisiert sein, die z.B. beim Bestücken der Ablagestruktur mit Gegenständen gespannt wird und sich nach bzw. während der Entnahme eines Gegenstands teilweise entspannt und die verbleibenden Gegenstände hin zum vorderen Rand der Ablagestruktur bewegt.

Im Zusammenhang mit der linienartigen Führung der Gegenstände hat es sich als besonders vorteilhaft erwiesen, wenn die

Produktführungsstruktur durch einen Führungsschacht gebildet ist, der benachbart zum hinteren Rand der Ablagestruktur offen ist.

Zum Realisieren der zum hinteren Rand der Ablagestruktur benachbarten Öffnung kann dort lokal auf eine Wand des Führungsschachtes verzichtet werden oder diese so niedrig gewählt werden, dass der Erfassungsbereich des Sensors im Wesentlichen ungehindert das innere des Führungsschachtes erfasst. Auch kann der Führungsschacht benachbart zum hinteren Rand der Ablagestruktur eine Wand mit einer loch- oder blendenartigen Öffnung aufweisen, durch die hindurch der Sensor in das Innere des Schachts "hineinsehen" kann.

Der Führungsschacht kann weitere Öffnungen, wie zum Beispiel eine Entnahmeöffnung beim vorderen Rand, aufweisen. Auch könnte er deckenseitig offen oder verschlossen sein.

Abschließend sei noch erwähnt, dass die erwähnten elektronischen Geräte natürliche eine Elektronik aufweisen. Die Elektronik kann diskret oder durch integrierte Elektronik oder auch eine Kombination aus beiden aufgebaut sein. Auch können Microcomputer, Micro Controller, Application Specific Integrated Circuits (ASICs), ggf. in Kombination mit analogen oder digitalen elektronischen Peripheriebausteinen zum Einsatz kommen. Funkgeräte weisen üblicherweise als Bestandteil eines Transceiver-Moduls eine Antennenkonfiguration zum Senden und Empfangen von Funk-Signalen auf.

Bevorzugt ist der Sensor batteriebetrieben.

Diese und weitere Aspekte der Erfindung ergeben sich durch die nachfolgend erörterten Figuren.

### Figurenkurzbeschreibung

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
- Fig. 1: einen Sensor für die Verwendung in einer erfindungsgemäßen Produktpräsentationsvorrichtung;
- Fig. 2: eine erfindungsgemäße Produktpräsentationsvorrichtung mit einer Produktführungsstruktur mit horizontal fix positionierten Sensoren;
- Fig. 3: eine weitere Produktpräsentationsvorrichtung ohne Produktführungsstruktur, jedoch mit einem Sensorbewegungssystem zur vertikalen Bewegung eines einzelnen Sensors;
- Fig. 4: eine weitere erfindungsgemäße Produktpräsentationsvorrichtung mit Produktführungsstruktur und Sensorbewegungssystem zur vertikalen Bewegung des einzelnen Sensors;
- Fig. 5: eine weitere erfindungsgemäße Produktpräsentationsvorrichtung mit Produktführungsstruktur und Sensorbewegungssystem zur sowohl horizontalen wie auch vertikalen Bewegung des einzelnen Sensors;
- Fig. 6: eine weitere erfindungsgemäße Produktpräsentationsvorrichtung mit Produktführungsstruktur und Sensorbewegungssystem zur horizontalen Bewegung von vertikal fix positionierten Sensoren,
- Fig. 7: ein weiteres Ausführungsbeispiel des Sensorbewegungssystems,
- Fig. 8: ein weiteres Ausführungsbeispiel des Sensorbewegungssystems,
- Fig. 9: eine weitere erfindungsgemäße Produktpräsentationsvorrichtung mit einem Drücker.

### Beschreibung der Ausführungsbeispiele

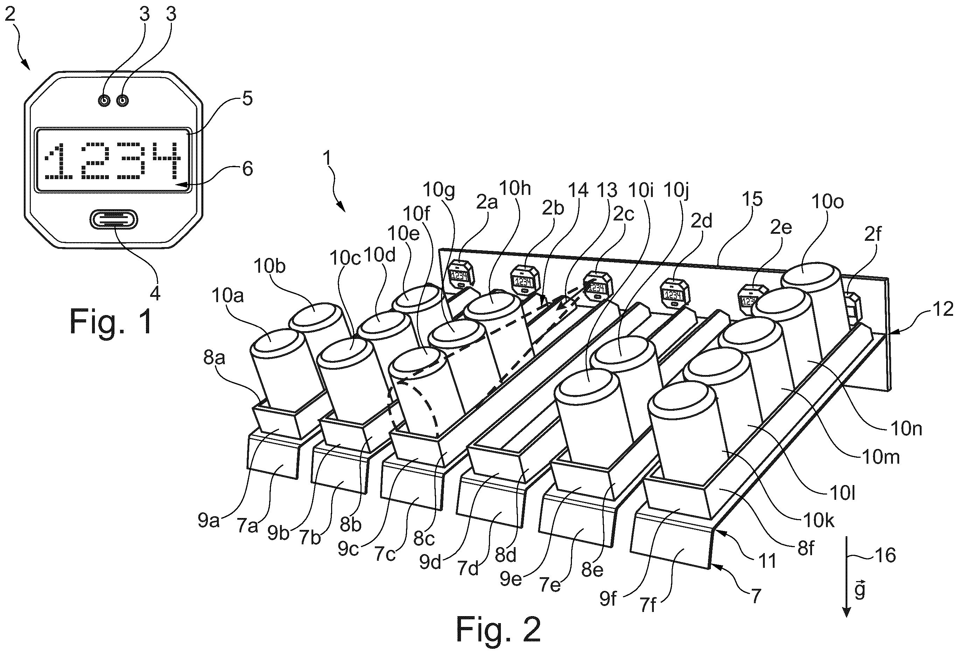

In der Figur 1 ist ein Sensor 2, mit Sensoreinheiten 3, einem Knopf 4 und einem Bildschirm 5 abgebildet.

Der Bildschirm 5 ist als energiesparender E-Paper-Display ausgebildet, kann aber auch als LCD-Bildschirm realisiert sein, und zeigt Sensoridentifikationsdaten in Form einer Sensor-ID 6 an, die Anwendern Rückschlüsse auf die MAC-Adresse (Media-Access-Control-Adresse) des Sensors ermöglichen. Hierfür kann die Sensor-ID 6 beispielsweise gleich den letzten Zeichen der MAC-Adresse sein oder einer Identifikationsnummer entsprechen, zu der in einer Datenbank die entsprechende MAC-Adresse hinterlegt ist.

Die Datenbank ist mittels entsprechender Applikation am Mobiltelefon des Anwenders abrufbar. Die Applikation erlaubt auch ein Scannen des Sensors 2 mit einer Kamera des Mobiltelefons, wobei die Sensor-ID 6 mittels Bilderkennung automatisch erkannt wird, sodass ein Scannen bzw. Fotografieren als Alternative zur händischen Eingabe des Codes möglich ist, um die Daten zum Sensor und zu einem zugehörigen Produkt oder mehreren zugehörigen Produkten abzufragen. Insbesondere kann so eine Echtzeit-Lagerstandabfrage durchgeführt werden, also eine Abfrage, ob im Lager oder ob in einem anderen Regal noch das entsprechende Produkt vorhanden ist.

Der Sensor 2 weist hierfür ein Funkmodul (das im Gehäuse verbaut und daher nicht sichtbar ist) auf, das dem Sensor 2 eine funkbasierte Kommunikation ermöglicht. Über das Funkmodul kann der Sensor 2 beispielsweise seine Erfassungsdaten und Produktabfrage-Aufforderungen übermitteln und Produktinformationen, insbesondere zum Lagerstand erhalten.

Wie im allgemeinen Teil der Beschreibung erörtert, kann die Funkkommunikation auf unterschiedlichste Weise erfolgen. Im hier genannten Beispiel wird von einer Kommunikation mit einem Access-Point eines Servers ausgegangen.

Eine weitere Möglichkeit, Sensorfunktionen zu nützen und insbesondere auch eine Produktabfrage zu starten, besteht darin, den Knopf 4 zu betätigen. Dadurch wird eine Sensorfunktion ausgelöst, wobei eine Anfrage zum Access-Point gesendet wird, woraufhin die entsprechenden Daten an den Sensor 2 und/oder gegebenenfalls an das Mobiltelefon des Anwenders gesendet werden. Drückt der Anwender also auf den Knopf 4, ändert der Bildschirm 5 seine Anzeige und zeigt eine Zahl oder Zeichenfolge an, die Informationen des Produkts repräsentieren. So kann die Anzeige eine Zahl wiedergeben, welche die Anzahl der verfügbaren Produkte angibt. Durch nochmaliges Drücken des Knopfes 4, kann die Position der verfügbaren Produkte abgefragt werden. Ein doppeltes Drücken innerhalb einer kurzen Zeit setzt den Sensor wieder zurück in den normalen Anzeigemodus, in dem er seine Sensor-ID 6 anzeigt.

Die Sensoreinheiten 3 erfassen die Anwesenheit von Gegenständen. Dabei wird im Wesentlichen der Abstand zwischen Gegenständen und dem Sensor 2 ermittelt. Es kann sich bei der Sensoreinheit 3 um unterschiedliche Sensortypen handeln. So kann es sich beispielsweise aber nicht abschließend um Ultraschallsensoren, Infrarot-Abstandssensoren, Kameras, oder 3D-Kameras handeln. Im vorliegenden Fall sei jedoch davon ausgegangen, dass es sich bei der Sensoreinheit 3 um eine time-of-flight Sensoreinheit 3, insbesondere um eine time-of-flight-Kamera (TOF-Kamera) handelt.

In der Figur 2 ist eine erfindungsgemäße Produktpräsentationsvorrichtung 1 mit fix positionierten Sensoren 2a-2f dargestellt.

Die Sensoren 2a-2f sind an einer Rückwand 15 befestigt.

Vor der Rückwand 15 befindet sich eine Ablagestruktur 7, die in sechs Abschnitte 7a-7f unterteilt ist. Die Ablagestruktur 7 bzw. jeder Abschnitt 7a-7f weist einen vorderen Rand 11 und einen hinteren Rand 12 auf. Am hinteren Rand 12 geht die Ablagestruktur 7 in die Rückwand 15 über.

In der Ablagestruktur 7 befinden sich Gegenstände 10a-10o, wobei es sich bei den Gegenständen 10a-10o um Produkte handelt. Im ersten Abschnitt 7a befinden sich zwei Gegenstände 10a-10b. Im zweiten Abschnitt 7b befinden sich drei Gegenstände 10c-10e. Im dritten Abschnitt 7c befinden sich drei Gegenstände 10f-10h. Im vierten Abschnitt 7d befindet sich kein Gegenstand. Im fünften Abschnitt 7e befinden sich zwei Gegenstände 10i-10j. Im sechsten Abschnitt 7f befinden sich fünf Gegenstände 10k-10o.

Der hintere Rand 12 der Ablagestruktur 7 ist in Richtung der Fallbeschleunigung, dargestellt durch den Pfeil 16, oberhalb des vorderen Randes 11 lokalisiert. Der Boden der Ablagestruktur 7 ist so glatt ausgebildet, dass darauf abgelegte Gegenstände 10a-12o automatisch hin zum vorderen Rand 11 gleiten.

Jeder Abschnitt 7a-7f weist eine Produktführungsstruktur 8a-8f auf. Diese Produktführungsstruktur 8a-8f führt die Gegenstände 10a-10o innerhalb eines Abschnittes 7a-7f jeweils in einer Linie, also entlang einer Anordnungslinie.

Die Produktführungsstruktur 8a-8f weist für jeden Abschnitt 7a-7f jeweils eine vordere Begrenzung 9a-9f auf, um ein Herausfallen der Gegenstände 10a-10o beim vorderen Rand 11 zu vermeiden. Die Begrenzung 9a-9f ist hierbei so niedrig ausgebildet, dass insbesondere die vordersten Gegenstände 10a, 10c, 10f, 10i und 10k gut einsehbar und nach leichtem Anheben einfach herausnehmbar sind. Wird einer dieser vordersten Gegenstände 10a, 10c, 10f, 10i und 10k herausgenommen rutscht der jeweils dahinter befindliche Gegenstand nach, also hin zur Begrenzung 9a-9f.

Jedem der Abschnitte 7a-7f ist jeweils ein Sensor 2a-2f zugeordnet.

Jeder Sensor 2a-2f weist eine Erfassungsrichtung 13 auf, die sich vom Sensor zu den jeweiligen Gegenständen 10a-10o in jeweils einem Abschnitt 7a-7f erstreckt. Exemplarisch ist die Erfassungsrichtung für den Sensor 2c als Pfeil eingezeichnet. Die Erfassungsrichtung 13 des Sensors 2c zeigt also in Richtung der Gegenstände 10f-10h, die sich im zum Sensor 2c gehörigen Abschnitt 7c befinden.

Um die Erfassungsrichtung 13 herum öffnet sich ausgehend vom jeweiligen Sensor 2a-2f ein kegelförmiger Erfassungsbereich 14 mit einem relativ geringen Öffnungswinkel (geringe Weite des Öffnungswinkels), wobei der Öffnungswinkel so gering ist, dass sich der Erfassungsbereich 14 über die Entfernung vom hinteren Rand hin bis zum vorderen Rand auf eine einzige Produktführungsstruktur 8a-8f beschränkt. Dieser Erfassungsbereich 14 ist ebenfalls exemplarisch für den Sensor 2c eingezeichnet. Die anderen Sensoren weisen also ebenfalls jeweils eine Erfassungsrichtung 13 und einen Erfassungsbereich 14 auf.

In diesem Ausführungsbeispiel überprüft jeder Sensor 2a-2f also jeweils eine Gruppe von Gegenständen 10a-10o, die lückenlos in einer Linie von der Begrenzung 9a-9f hin zum Sensor 2a-2f angeordnet sind. Jeder Sensor 2a-2f kann so einen Abstand erfassen bzw. messen, der repräsentativ für die Anzahl der Gegenstände 10a-10o im jeweiligen Abschnitt 7a-7f ist. Vom Sensor 2a-2f generierte Erfassungsdaten können vom Sensor 2a-2f selbst oder von einem Warenwirtschaftssystem oder auch beispielsweise einem mobilen Gerät (nicht dargestellt) ausgewertet werden. Die Länge des Abschnittes 7c von der Begrenzung 9c bis zum Sensor 2c, abzüglich des Abstands des hintersten Gegenstandes 10h hin zum Sensor 2c entspricht demnach der Länge, die von den Gegenständen 10f-10h belegt wird. Diese Länge dividiert durch die jeweilige (z.B. in einer Datenbank) hinterlegte Abmessung der Gegenstände 10f-10h (gemessen in der Erfassungsrichtung), ergibt die Anzahl der Gegenstände 10f-10h in einem Abschnitt 7c. Im vorliegenden Fall wird als Divisor der Durchmesser der zylindrischen Gegenstände verwendet.

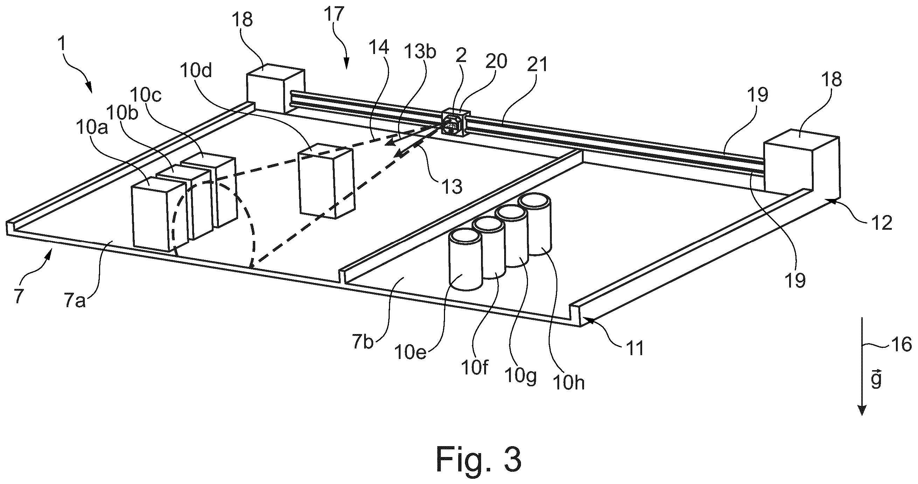

Die Figur 3 zeigt ein Ausführungsbeispiel einer Produktpräsentationsvorrichtung 1 ohne Produktführungsstruktur 8a-8f.

In diesem Ausführungsbeispiel wurde auch auf die Rückwand 15 verzichtet, um Platz für ein Sensorbewegungssystem 17 zu schaffen. Nichtsdestotrotz kann sich hinter dem Sensorbewegungssystem 17 eine Wand erstrecken, um z.B. zwei Regalseiten voneinander zu trennen oder ein Regal strukturell zu begrenzen.

Das Sensorbewegungssystem 17 weist zwei Antriebseinheiten 18 auf, die mit zwei Schienen 19 verbunden sind. Auf den Schienen 19 ist ein Schlitten 20 montiert, der entlang der Scheinen 19 verschiebbar ist. Auf dem Schlitten 20 ist der Sensor 2 befestigt. Der Schlitten 20 ist mit einem Riemen 21 verbunden. Die Antriebseinheiten 18 sind dazu ausgebildet, den Riemen 21 über zumindest eine angetriebene Riemenscheibe im Inneren mindestens einer Antriebseinheit 18 zu ziehen und so den Schlitten 20 und den Sensor 2 entlang des hinteren Randes 12 zu verschieben. Das Sensorbewegungssystem 17 ist also dazu ausgebildet, den Sensor 2 in Bezug zur Fallbeschleunigung, dargestellt durch den Pfeil 16, horizontal zu verschieben und zu positionieren.

Vor dem Sensorbewegungssystem 17 befindet sich die Ablagestruktur 7, die in zwei Abschnitte 2a, 2b unterteilt ist. Die Ablagestruktur 7, bzw. jeder Abschnitt 7a,7b weist den vorderen Rand 11 und den hinteren Rand 12 auf. Beim hinteren Rand 12 befindet sich das Sensorbewegungssystem 17.

Auf der Ablagestruktur 7 befinden sich auch hier Gegenstände 10a-10h, wobei es sich bei den Gegenständen 10a-10h ebenfalls um Produkte handelt. Im ersten Abschnitt 7a befinden sich vier Gegenstände 10a-10d, wobei drei Gegenstände 10a-10c in einer Reihe stehen, während der vierte Gegenstand 10d alleine steht. Im zweiten Abschnitt 7b befinden sich vier Gegenstände 10e-10h.

Der hintere Rand 12 der Ablagestruktur 7 ist in diesem Ausführungsbeispiel bezogen auf die Richtung der Fallbeschleunigung (dargestellt durch den Pfeil 16) in einer Ebene mit dem vorderen Rand 11 ausgerichtet. Im Unterschied zum vorangehend erörterten Ausführungsbeispiel gleiten die Gegenstände 10a-10f also nicht zufolge der Fallbeschleunigung zum vorderen Rand 11, sondern verharren in ihrer jeweiligen Position, bis sie manuell bewegt werden.

Die Erfassungsrichtung 13 des Sensors 2 verläuft parallel zur Fläche der Ablagestruktur 7 und zeigt vom Sensor 2 zum vorderen Rand 11. Es ist aber auch möglich, dass der Sensor 2 dazu ausgebildet ist, die Erfassungsrichtung 13 zu verändern, sodass diese nicht normal auf die Bewegungsrichtung des Sensors 2 stehen muss.

Der Erfassungsbereich 14 erstreckt sich auch hier kegelförmig um die Erfassungsrichtung 13.

Für eine kostengünstige Variante dieses Ausführungsbeispiels kann es sich bei dem Sensor 2 um einen einfachen Laufzeit-Sensor handeln, der den Abstand vom Sensor 2 zum nächsten Gegenstand in Erfassungsrichtung 13 erfasst bzw. misst. Bewegt das Sensorbewegungssystem 17 den Sensor 2 entlang des hinteren Randes 12, kann dieser mehrere Bereiche erfassen, wobei nach anschließender Auswertung der Erfassungsergebnisse Rückschlüsse auf die Anzahl der Gegenstände in den jeweiligen Abschnitten gemacht werden können.

So lässt sich aus den Erfassungsdaten erkennen, dass im zweiten Abschnitt 7b der hinterste erfasste Gegenstand 10h so platziert ist, dass sich maximal 4 Gegenstände des vorgesehenen Gegenstandtyps in diesem Abschnitt befinden können. Im ersten Abschnitt 7a werden zwei Abstände, korrespondierend zu den Gegenständen 10c und 10d erfasst. Aus dem Abstand, der bei der Erfassung des linken Gegenstands 10c erfasst wurde, lässt sich zurückschießen bzw. errechnen, dass maximal drei Gegenstände 10a-10c des vorgesehenen Gegenstandtyps vorhanden sein können. Aus dem Abstand, der bei der Erfassung des rechten Gegenstands 10d erfasst wurde, lässt sich zurückschießen bzw. errechnen, dass maximal fünf Gegenstände 10d des vorgesehenen Gegenstandtyps vorhanden sein können. Im ersten Abschnitt 7a können also maximal acht Gegenstände 10a-10c vorhanden sein. Die Tatsache, dass nur noch zwei Reihen von Gegenständen 10a-10d im ersten Abschnitt 7a und eine Reihe von Gegenständen 10e-10h im zweiten Abschnitt 7b erfasst wurden und dass diese Reihen auch im besten Fall nur noch wenige Gegenstände beinhalten, kann vom Warenwirtschaftssystem als Hinweis interpretiert werden, dass die Gegenstände 10a-10h nachzufüllen sind. Das Verkaufspersonal kann darüber mittels Mobiltelefons durch das Warenwirtschaftssystem informiert werden. Wie man erkennt, gibt diese Abschätzung einen guten Richtwert, ob Gegenstände 10a-10h bzw. Produkte nachgeschlichen werden müssen, allerdings stimmt diese Abschätzung nicht mit der tatsächlichen Anzahl an Gegenständen 10a-10h überein.

Um eine genauere Abschätzung der Anzahl der Gegenstände zu erhalten, kann der Sensor 2 die Erfassungsrichtung 13 um einen Winkel, beispielsweise um 5°, ändern, sodass die neue Erfassungsrichtung 13b immer noch parallel zur Fläche der Ablagestruktur 7 ist. Fährt der Sensor 2 nun ein zweites Mal entlang des hinteren Randes 12, und erfasst die jeweiligen Abstände, kann aus den Daten der beiden Durchläufe eine genauere Anzahl an Gegenständen berechnet werden, weil so festgestellt werden kann, ob zwischen dem vorderen Rand 11 und dem Gegenstand 10d noch ein weiterer oder auch mehrere Gegenstände stehen oder eben nicht. Dabei können auch die sich zwischen dem vorderen Rand 11 und dem Gegenstand 10c befindlichen Gegenstände 10a und 10b erfasst werden.

Eine noch genauere Erfassung der Gegenstände 10a-10h ist möglich, wenn es sich bei dem Sensor um eine 3D-Kamera, beispielsweise um eine TOF-Kamera handelt.

Die Bewegung des Sensors 2 wird mit einer nicht weiter dargestellten elektronischen Steuerung, welche die Antriebseinheiten 18 elektronisch ansteuert, veranlasst.

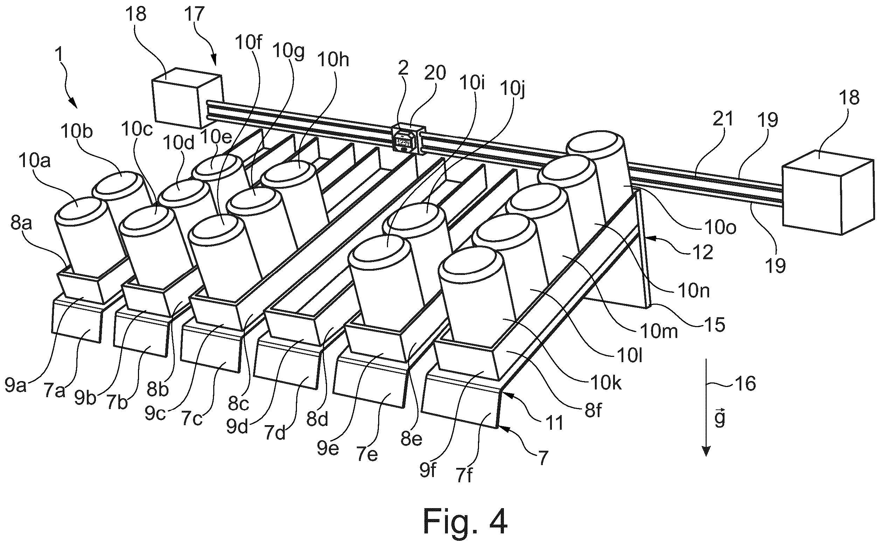

Weiterhin kann die Genauigkeit der Abschätzung der Anzahl der Gegenstände 10a-10h verbessert werden, wenn wie im Zusammenhang mit der Figur 2 erörtert, eine Produktführungsstruktur 8a-8f vorgesehen ist. Ein Ausführungsbeispiel, das eine Kombination der Produktführungsstruktur 8a-8f und des Sensorbewegungssystems 17 aufweist, ist in der Figur 4 dargestellt.

Vor dem Sensorbewegungssystem 17 befindet sich die Ablagestruktur 7. Oberhalb des hinteren Randes 12 fehlt die in der Figur 2 dort sichtbare Rückwand 15 um den Sensor 2 die ungestörte Erfassung der Gegenstände 10a-10o, die sich in der Ablagestruktur 7 befinden, zu ermöglichen.

Die Ablagestruktur 7, die unterhalb des hinteren Rands 12 der Ablagestruktur 7 verlaufende Rückwand 15 und die Antriebseinheiten 18 können fix mit einer nicht dargestellten Trägerstruktur, wie beispielsweise ein Stabwerk oder andere ebene Blechteile bzw. Wände, verbunden sein.

Auch hier ist der Sensor so orientiert, dass seine nicht im Detail dargestellte Erfassungsrichtung 13 vom Sensor 2 hin zum vorderen Rand 11 zeigt und parallel zur Ebene zur Erstreckung der jeweiligen Abschnitte 7a-7f verläuft.

Das Sensorbewegungssystem 17, insbesondere die erwähnte Steuerung, ist dazu ausgebildet, den Sensor 2 in diskrete Positionen zu bewegen. Diese diskreten Positionen sind hier jene, in denen die Erfassungsrichtung und die Linie, in der die Gegenstände 10a-10o positioniert sind, zusammenfallen. So wird für jeden Abschnitt 7a-7f jeweils eine Erfassung durchgeführt.

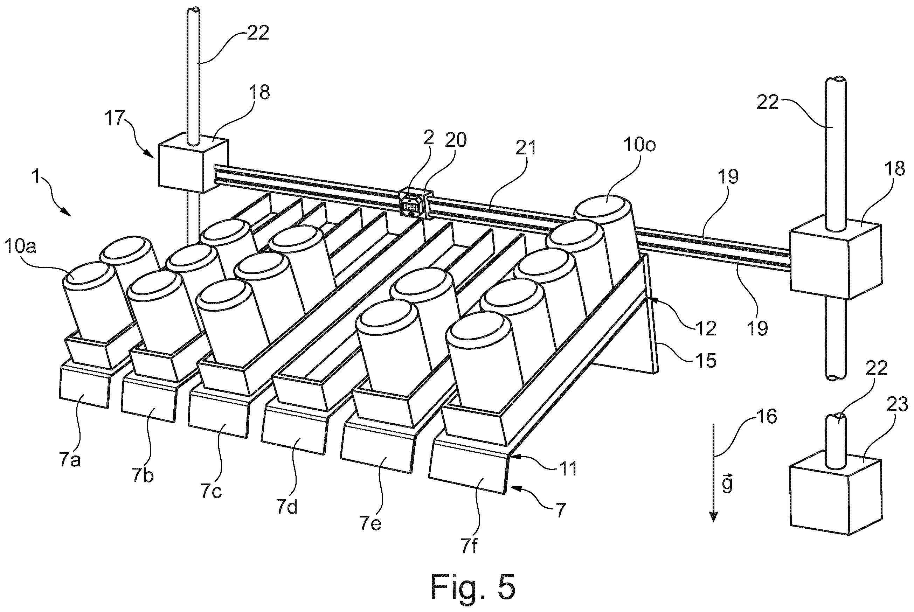

In der Figur 5 sieht man ein weiteres Ausführungsbeispiel der Produktpräsentationsvorrichtung 1, wobei der Sensor 2 nicht nur horizontal, sondern auch vertikal bewegbar ist.

In diesem Ausführungsbeispiel handelt es sich bei der Produktpräsentationsvorrichtung 1 um ein Regal, das mehrere Ablagestrukturen 7 aufweist, die übereinander angeordnet sind, wobei jedoch nur eine einzige dargestellt ist.

Im Sinne der Übersichtlichkeit, wurden die Bezugszeichen reduziert.

Jede der beiden Antriebseinheiten 18 ist im Unterschied zur Figur 4 hier jedoch vertikal bewegbar und umschließt mit einem Innengewinde jeweils eine Gewindestange 22. Jede Gewindestange 22 wird jeweils von einer Gewindestangenantriebseinheit 23 angetrieben. Die Gewindestangenantriebseinheit 23 ist fix mit der auch hier nicht dargestellten Trägerstruktur verbunden. Sie ist also relativ zur Rückwand 15 fix.

Das Sensorbewegungssystem 17 bzw. dessen Gewindestangenantriebseinheit 23 kann gesteuert durch die elektronische Steuerung den Sensor 2 also nicht nur entlang des hinteren Randes 12 der dargestellten Ablagestruktur 7 bewegen, sondern ihn auch in Ebenen oberhalb oder unterhalb der dargestellten Ablagestruktur 7 bewegen. Der Sensor 2 kann also nicht nur mehrere Abschnitte 7a-7f einer Ablagestruktur 7, sondern auch mehrere Ablagestrukturen 7, also ein ganzes Regal erfassen.

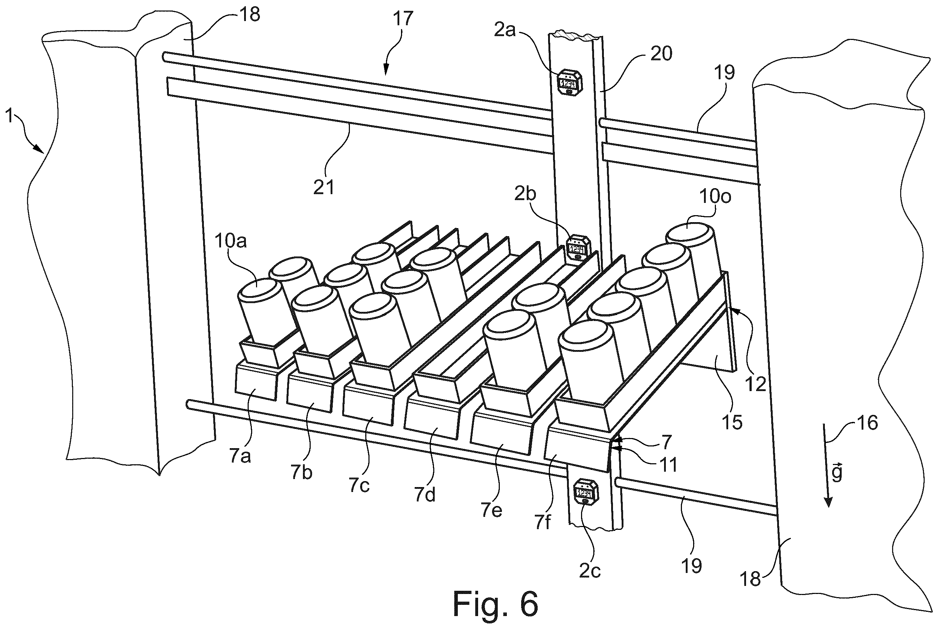

Die Figur 6 zeigt ein weiteres Ausführungsbeispiel eines Sensorbewegungssystems 17 zum Erfassen mehrerer übereinander angeordneter Ablagestrukturen 7. Dafür sind hier mehrere Sensoren 2a-2c auf einem Schlitten 20 vorgesehen, wobei jeder Sensor 2a-2c jeweils einer der Ablagestrukturen 7 zugeordnet ist. Der Schlitten 20 fährt auf den beiden Schienen 19 entlang des hinteren Randes 12 der Ablagestrukturen 7. Die Antriebseinheiten 18 sind hier, wie auch die Rückwand 15, fix mit der Trägerstruktur verbunden. Die Antriebseinheiten 18 sind dazu ausgebildet, den Schlitten 20 über den Riemen 21 zu bewegen. Der mittlere Sensor 2b ist hierbei der dargestellten Ablagestruktur 7 zugeordnet, was sich durch seine horizontale Verortung ergibt. Der obere Sensor 2a und der untere Sensor 2c sind hier jeweils nicht dargestellten anderen Ablagestrukturen 7 zugeordnet, was sich durch ihre individuelle horizontale Verortung ergibt.

Fährt der Schlitten 20 horizontal entlang der Ablagestrukturen 7, erfasst jeder Sensor die Gegenstände 10a-10o in den jeweiligen Ablagestrukturen 7.

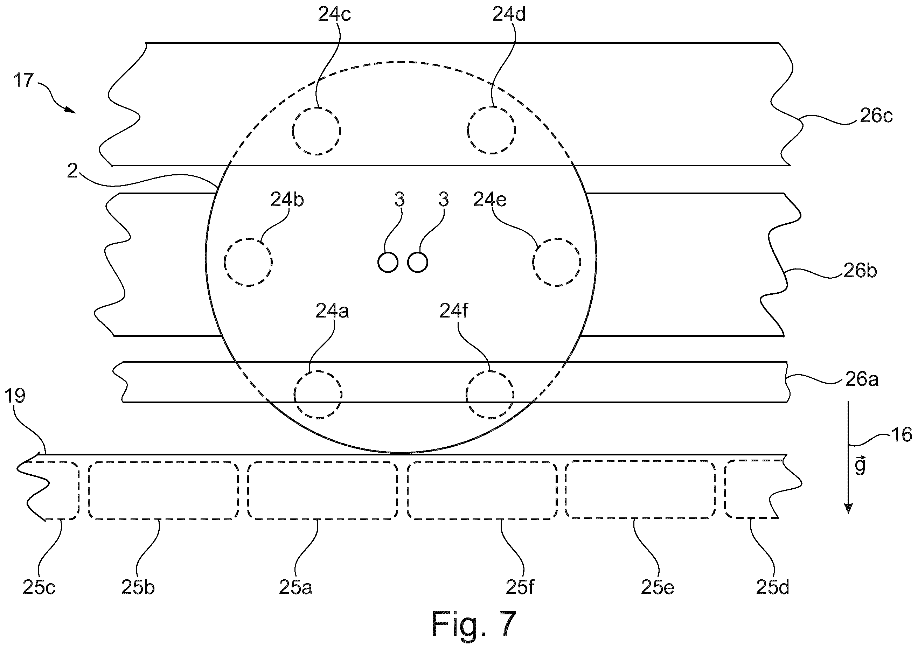

In der Figur 7 ist ein sehr platzsparende Ausführungsbeispiel für das Sensorbewegungssystem 17 bzw. für den Sensor 2 dargestellt. Der Sensor 2 ist als zylindrisches Antriebsrad ausgeführt. Die Sensoreinheiten 3 sind nahe bei der Mitte des Sensors 2 angeordnet. Der Sensor 2 befindet sich auf einer Schiene 19 und ist dazu ausgebildet, auf dieser abzurollen. Das Sensorbewegungssystem 17 weist weiterhin drei Leisten 26a, 26b und 26c auf, die dazu ausgebildet sind, den Sensor 2 auf der Schiene 19 zu halten. Zu diesem Zweck befindet sich die untere Leiste 26a und die obere Leiste 26 c auf jener Seite des Sensors 2, auf dem sich der Erfassungsbereich 14 befindet, während die mittlere Leiste 26b sich auf der anderen Seite befindet. So ist es ausgeschlossen, dass der Sensor 2 von der Schiene 19 herunterfällt.

Der Sensor 2 weist sechs erste Magnetelemente 24a-24f auf, bei denen es sich um Permanentmagnete handelt.

Die Schiene 19 weist über die gesamte Länge hinweg eine Vielzahl an zweiten Magnetelementen 25a-25f auf, bei denen es sich um individuell ein- und ausschaltbare Elektromagnete handelt.

In der dargestellten Position sind die beiden mittleren zweiten Magnetelemente 25a und 25f so geschaltet, dass sie die entsprechenden ersten Magnetelemente 24a und 24f zu sich hinziehen.

Um den Sensor 2 weiter nach rechts zu bewegen, also im Uhrzeigersinn zu drehen, wird der linke der beiden aktiven zweiten Magnetelemente 25a deaktiviert und das nächste rechte zweite Magnetelement 25e aktiviert, sodass das entsprechende erste Magnetelement 24e nach unten zur Schiene 19 gezogen wird. Zusätzlich kann gleichzeitig das zuvor aktive zweite Magnetelement 25a umgepolt aktiviert werden, um das korrespondierende erste Magnetelement 24a von der Schiene 19 weg zu drücken.

Alternativ kann das erste Magnetelement 24a-24f als ferromagnetisches Magnetelement ausgebildet sein.

Es ist auch möglich, dass es sich bei den ersten Magnetelementen 24a-24f um schaltbare Elektromagnete handelt. Entsprechend kann es sich bei den zweiten Magnetelementen 25a-25b um Permanentmagnete oder um ferromagnetische Magnetelemente handeln. Auch kann die Schiene 19 aus einem entsprechenden Material gefertigt sein.

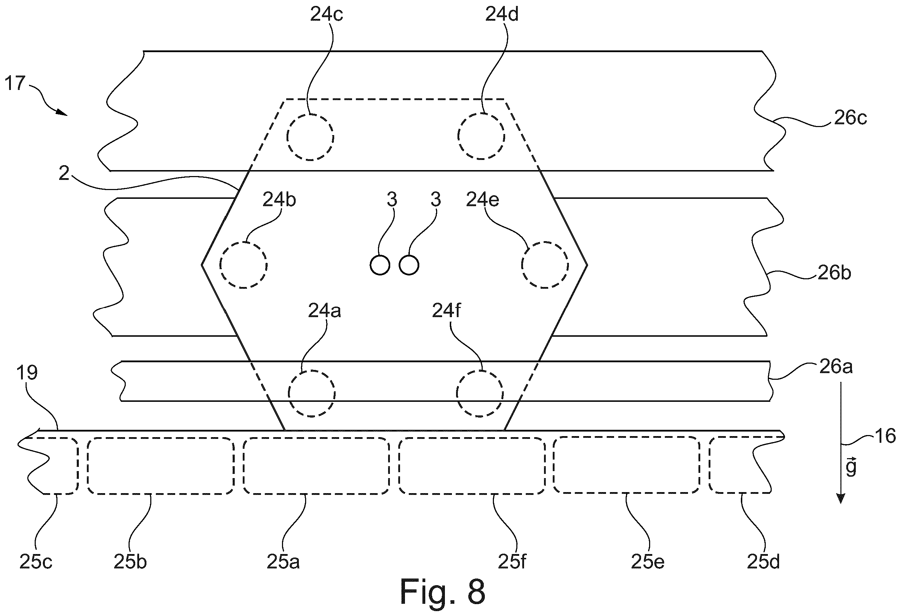

In der Figur 8 ist ein weiteres Ausführungsbeispiel zu sehen, wobei im Unterschied zum in der Figur 7 gezeigten Ausführungsbeispiel hier, in der Figur 8, das Antriebsrad polygonförmig ist. Das bedeutet, dass jene Flächen, auf denen der Sensor 2 in stabilen Lagen steht im Querschnitt normal auf diese Flächen im Wesentlichen ein konvexes Polygon bilden.

Dies gibt den Sensor 2 auch bei nicht aktivierten Elektromagneten einen sicheren Halt an einer gewünschten Position.

Weiterhin ist so der Sensor 2 in bestimmte, diskrete Positionen positionierbar. Die Aufteilung der Ablagestruktur 7 lässt sich also an die Abmessungen des Sensors 2 so anpassen, dass der Sensor 2 jeweils in den gewünschten diskreten Positionen platzierbar ist.

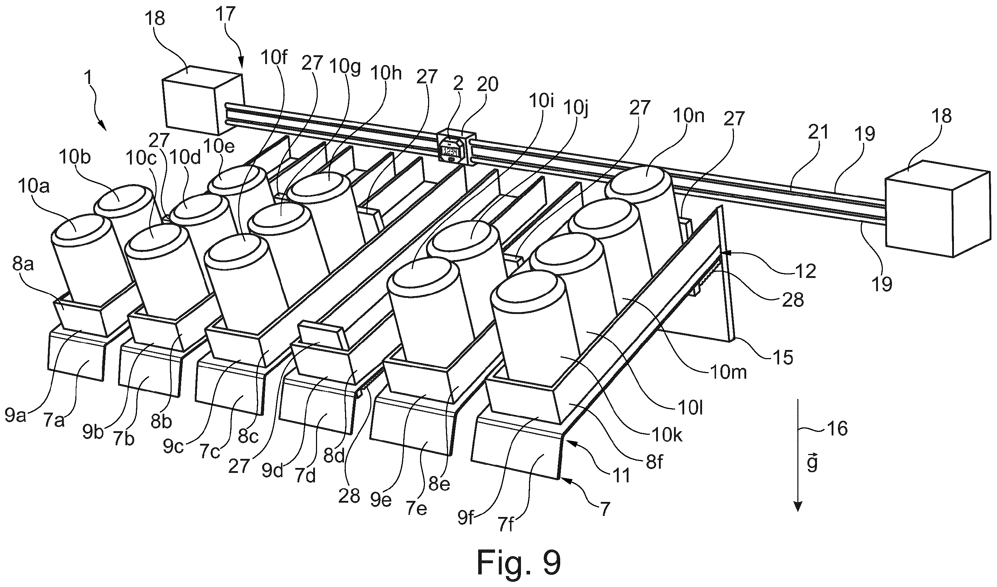

In der Figur 9 ist ein weiteres Ausführungsbeispiel der Produktpräsentationsvorrichtung 1 zu sehen, das weitgehend jenem in der Figur 4 gleicht. Im Unterschied zu der Figur 4 weist die Produktführungsstruktur 8a-8f hier jedoch plattenförmige Drücker 27 auf, die dazu vorgesehen sind, Gegenstände 10a-10n, die in der Ablagestruktur 7 bzw. deren Abschnitten 7a-7f platziert sind, zum vorderen Rand 11 zu drücken. Hierfür ist jeder Drücker 27 jeweils mit einem Federelement 28 verbunden, das den jeweiligen Drücker 27 von der Rückwand 15 wegdrückt bzw. zum vorderen Rand 11 hindrückt.

Im Unterschied zur Figur 4 erfasst der Sensor 2 hier nicht unmittelbar den Abstand zwischen dem Sensor 2 und dem Gegenstand 10a-10n, sondern direkt den Abstand zwischen dem Sensor 2 und dem Drücker 27. Weil die Abmessungen der Drücker 27 bekannt sich, kann einfach auf den Abstand vom Sensor 2 zum nächstgelegenen Gegenstand 10a-10n des jeweiligen Abschnitts 7a-7f zurückgerechnet werden.

An dieser Stelle sei noch erwähnt, dass die Abschnitte 7a-7f nicht separiert voneinander vorliegen müsse. Vielmehr können sie auch als zusammenhängende Ebene bzw. Baugruppe ausgeführt sein.

Es wird abschließend noch einmal darauf hingewiesen, dass es sich bei den vorangehend detailliert beschriebenen Figuren nur um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Offenbart werden auch die folgenden Ausführungsformen.
Ausführungsform 1. Produktpräsentationsvorrichtung (1), die aufweist:
   - zumindest einen Sensor (2) mit einem Erfassungsbereich (14) zum Erfassen eines Gegenstandes (10a-10o) innerhalb des Erfassungsbereichs (14), insbesondere durch Abstandsmessung zwischen dem Sensor (2) und dem Gegenstand (10a-10o), und
   - zumindest eine Ablagestruktur (7) zur Ablage des Gegenstandes (10a-10o), wobei die Ablagestruktur (7) einen hinteren Rand (12) und einen vorderen Rand (11) aufweist, wobei der Erfassungsbereich (14) des Sensors (2) entlang der Richtung vom hinteren Rand (12) zum vorderen Rand (11) hin orientiert ist, wobei
      entweder gemäß einer Ausbildungsform a) ein Sensorbewegungssystem (17) vorgesehen ist, mit dessen Hilfe ein Sensor (2) entlang des hinteren Randes (12) bewegbar ist,
      oder gemäß einer Ausbildungsform b) entlang des hinteren Randes (12) individuell positionierte Sensoren (2) vorgesehen sind und korrespondierend zu der Position des jeweiligen Sensors (2) eine Produktführungsstruktur (8a-8f) vorgesehen ist, die zur Führung des Gegenstands (10a-10o) hin zum vorderen Rand (11) vorgesehen ist,
      wobei die Produktführungsstruktur (8a-8f) derart ausgebildet ist, dass
   - entweder die Produktführungsstruktur (8a-8f) vom jeweiligen Sensor (2) unmittelbar erfassbar ist
   - oder das unmittelbare Erfassen des geführten Gegenstands (10a-10o) durch den Sensor (2) ermöglicht ist,
      oder gemäß einer Ausbildungsform c) ein Sensorbewegungssystem (17) vorgesehen ist, mit dessen Hilfe ein Sensor (2) entlang des hinteren Randes (12) bewegbar ist, und eine Produktführungsstruktur (8a-8f) vorgesehen ist, die zur Führung des Gegenstands (10a-10o) hin zum vorderen Rand (11) vorgesehen ist,
      wobei die Produktführungsstruktur (8a-8f) derart ausgebildet ist, dass
   - entweder die Produktführungsstruktur (8a-8f) vom jeweiligen Sensor (2) unmittelbar erfassbar ist
   - oder das unmittelbare Erfassen des geführten Gegenstands (10a-10o) durch den Sensor (2) ermöglicht ist,
   oder gemäß einer Ausbildungsform d) entlang des hinteren Randes zumindest ein Sensor, optional auch zumindest eine Produktführungsstruktur gemäß der Ausbildungsform c), vorgesehen ist, wobei der zumindest eine Sensor einen variablen Öffnungswinkel seines Erfassungsbereiches aufweist.
Ausführungsform 2. Produktpräsentationsvorrichtung (1) nach Ausführungsform 1, wobei die Ablagestruktur (7) eine von der Horizontalen abweichende Neigung aufweist, und der Sensor (2) derart orientiert ist, dass sein Erfassungsbereich (14) im Wesentlichen der Neigung der Ablagestruktur (7) folgt.
Ausführungsform 3. Produktpräsentationsvorrichtung (1) nach einer der vorangehenden Ausführungsformen, wobei der Sensor (2) zur Laufzeitmessung ausgebildet ist.
Ausführungsform 4. Produktpräsentationsvorrichtung (1) nach einer der vorangehenden Ausführungsformen, wobei der Sensor (2) dazu ausgebildet ist, seine Erfassungsdaten, die das Erfassen des Gegenstands (10a-10o) repräsentieren, funkbasiert abzugeben.
Ausführungsform 5. Produktpräsentationsvorrichtung (1) nach einer der vorangehenden Ausführungsformen, wobei der Sensor (2) dazu ausgebildet ist, eine Erfassung zyklisch durchzuführen.
Ausführungsform 6. Produktpräsentationsvorrichtung (1) nach einer der vorangehenden Ausführungsformen, wobei der Sensor (2) dazu ausgebildet ist, ein Erfassungssteuersignal zu empfangen und als Folge davon eine Erfassung durchzuführen.
Ausführungsform 7. Produktpräsentationsvorrichtung (1) nach einer der vorangehenden Ausführungsformen, wobei der Sensor (2) einen Bildschirm (5) aufweist, um Sensoridentifikationsdaten (6) oder Produktidentifikationsdaten anzuzeigen.
Ausführungsform 8. Produktpräsentationsvorrichtung (1) nach einer der vorangehenden Ausführungsformen, wobei der Sensor (2) eine Eingabeeinheit (4), insbesondere einen Knopf, zum Auslösen einer Sensorfunktion, bevorzugt einer Produktabfrage, besonders bevorzugt einer Echtzeit-Lagerstandabfrage, aufweist.
Ausführungsform 9. Produktpräsentationsvorrichtung (1) nach einer der vorangehenden Ausführungsformen gemäß Ausbildungsform a) oder c) der Ausführungsform 1, wobei das Sensorbewegungssystem (17) zumindest eine der nachfolgend angeführten Ausbildungen aufweist, nämlich
   - ein seilzugbasiertes Sensorbewegungssystem,
   - ein riemenbasiertes Sensorbewegungssystem
   - ein zahnrad- bzw. zahnstangenbasierten Sensorbewegungssystem,
   - ein gewindebasierten Sensorbewegungssystem,
   - ein magnetbasiertes Sensorbewegungssystem.
Ausführungsform 10. Produktpräsentationsvorrichtung (1) nach Ausführungsform 9, wobei das Sensorbewegungssystem (17) derart ausgebildet ist, dass die Bewegung des Sensors (2) entlang des hinteren Randes (12) durch eine Linearbewegung oder eine Rotationsbewegung oder eine Überlagerung einer Linear- mit einer Rotationsbewegung gegeben ist.
Ausführungsform 11. Produktpräsentationsvorrichtung (1) nach einem der Ausführungsformen 9 bis 10, wobei das Sensorbewegungssystem (17) derart ausgebildet ist, dass der Sensor (2) an diskreten Positionen positionierbar ist.
Ausführungsform 12. Produktpräsentationsvorrichtung (1) nach einer der vorangehenden Ausführungsformen gemäß Ausbildungsform b) oder c) der Ausführungsform 1, wobei der hintere Rand (12) der Ablagestruktur (7) in Richtung der Fallbeschleunigung oberhalb des vorderen Rands (11) der Ablagestruktur (7) liegt, wobei die Produktführungsstruktur (8a-8f) im Bereich des vorderen Rands (11) der Ablagestruktur (7) oder die Ablagestruktur (7) an ihrem vorderen Rand (11) eine Begrenzung (9a-9f) aufweist.
Ausführungsform 13. Produktpräsentationsvorrichtung (1) nach einer der vorangehenden Ausführungsformen gemäß Ausbildungsform b) oder c) der Ausführungsform 1, wobei die Produktführungsstruktur (8a-8f) derart ausgebildet ist, dass mehrere Gegenstände (10a-10o) hintereinander entlang einer Linie, die sich zwischen dem hinteren Rand (12) und dem vorderen Rand (11) der Ablagestruktur (7) erstreckt, platzierbar und führbar sind.
Ausführungsform 14. Produktpräsentationsvorrichtung (1) nach einer der vorangehenden Ausführungsformen gemäß Ausbildungsform b) oder c) der Ausführungsform 1, wobei die Produktführungsstruktur (8a-8f) zum Bewegen eines Gegenstands (10a-10o) oder mehrerer Gegenstände (10a-10o) hin zum vorderen Rand (11) der Ablagestruktur (7) ausgebildet ist.
Ausführungsform 15. Produktpräsentationsvorrichtung (1) nach einer der vorangehenden Ausführungsformen gemäß Ausbildungsform b) oder c) der Ausführungsform 1, wobei die Produktführungsstruktur (8a-8f) durch einen Führungsschacht gebildet ist, der benachbart zum hinteren Rand (12) der Ablagestruktur (7) offen ist.

## Patentansprüche

1. Produktpräsentationsvorrichtung (1), die aufweist:
- zumindest einen Sensor (2) mit einem Erfassungsbereich (14) zum Erfassen eines Gegenstandes (10a-10o) innerhalb des Erfassungsbereichs (14), insbesondere durch Abstandsmessung zwischen dem Sensor (2) und dem Gegenstand (10a-10o), und
- zumindest eine Ablagestruktur (7) zur Ablage des Gegenstandes (10a-10o), wobei die Ablagestruktur (7) einen hinteren Rand (12) und einen vorderen Rand (11) aufweist, wobei der Erfassungsbereich (14) des Sensors (2) entlang der Richtung vom hinteren Rand (12) zum vorderen Rand (11) hin orientiert ist, wobei
ein Sensorbewegungssystem (17) vorgesehen ist, mit dessen Hilfe ein Sensor (2) entlang des hinteren Randes (12) bewegbar ist, und eine Produktführungsstruktur (8a-8f) vorgesehen ist, die zur Führung des Gegenstands (10a-10o) hin zum vorderen Rand (11) vorgesehen ist,
wobei die Produktführungsstruktur (8a-8f) derart ausgebildet ist, dass
- entweder die Produktführungsstruktur (8a-8f) vom jeweiligen Sensor (2) unmittelbar erfassbar ist
- oder das unmittelbare Erfassen des geführten Gegenstands (10a-10o) durch den Sensor (2) ermöglicht ist.

2. Produktpräsentationsvorrichtung (1) nach Anspruch 1, wobei die Ablagestruktur (7) eine von der Horizontalen abweichende Neigung aufweist, und der Sensor (2) derart orientiert ist, dass sein Erfassungsbereich (14) im Wesentlichen der Neigung der Ablagestruktur (7) folgt.

3. Produktpräsentationsvorrichtung (1) nach einem der vorangehenden Ansprüche, wobei der Sensor (2) zur Laufzeitmessung ausgebildet ist.

4. Produktpräsentationsvorrichtung (1) nach einem der vorangehenden Ansprüche, wobei der Sensor (2) dazu ausgebildet ist, seine Erfassungsdaten, die das Erfassen des Gegenstands (10a-10o) repräsentieren, funkbasiert abzugeben.

5. Produktpräsentationsvorrichtung (1) nach einem der vorangehenden Ansprüche, wobei der Sensor (2) dazu ausgebildet ist, eine Erfassung zyklisch durchzuführen.

6. Produktpräsentationsvorrichtung (1) nach einem der vorangehenden Ansprüche, wobei der Sensor (2) dazu ausgebildet ist, ein Erfassungssteuersignal zu empfangen und als Folge davon eine Erfassung durchzuführen.

7. Produktpräsentationsvorrichtung (1) nach einem der vorangehenden Ansprüche, wobei der Sensor (2) einen Bildschirm (5) aufweist, um Sensoridentifikationsdaten (6) oder Produktidentifikationsdaten anzuzeigen.

8. Produktpräsentationsvorrichtung (1) nach einem der vorangehenden Ansprüche, wobei der Sensor (2) eine Eingabeeinheit (4), insbesondere einen Knopf, zum Auslösen einer Sensorfunktion, bevorzugt einer Produktabfrage, besonders bevorzugt einer Echtzeit-Lagerstandabfrage, aufweist.

9. Produktpräsentationsvorrichtung (1) nach einem der vorangehenden Ansprüche, wobei das Sensorbewegungssystem (17) zumindest eine der nachfolgend angeführten Ausbildungen aufweist, nämlich
- ein seilzugbasiertes Sensorbewegungssystem,
- ein riemenbasiertes Sensorbewegungssystem
- ein zahnrad- bzw. zahnstangenbasierten Sensorbewegungssystem,
- ein gewindebasierten Sensorbewegungssystem,
- ein magnetbasiertes Sensorbewegungssystem.

10. Produktpräsentationsvorrichtung (1) nach Anspruch 9, wobei das Sensorbewegungssystem (17) derart ausgebildet ist, dass die Bewegung des Sensors (2) entlang des hinteren Randes (12) durch eine Linearbewegung oder eine Rotationsbewegung oder eine Überlagerung einer Linear- mit einer Rotationsbewegung gegeben ist.

11. Produktpräsentationsvorrichtung (1) nach Anspruch 9 oder 10, wobei das Sensorbewegungssystem (17) derart ausgebildet ist, dass der Sensor (2) an diskreten Positionen positionierbar ist.

12. Produktpräsentationsvorrichtung (1) nach einem der vorangehenden Ansprüche, wobei der hintere Rand (12) der Ablagestruktur (7) in Richtung der Fallbeschleunigung oberhalb des vorderen Rands (11) der Ablagestruktur (7) liegt, wobei die Produktführungsstruktur (8a-8f) im Bereich des vorderen Rands (11) der Ablagestruktur (7) oder die Ablagestruktur (7) an ihrem vorderen Rand (11) eine Begrenzung (9a-9f) aufweist.

13. Produktpräsentationsvorrichtung (1) nach einem der vorangehenden Ansprüche, wobei die Produktführungsstruktur (8a-8f) derart ausgebildet ist, dass mehrere Gegenstände (10a-10o) hintereinander entlang einer Linie, die sich zwischen dem hinteren Rand (12) und dem vorderen Rand (11) der Ablagestruktur (7) erstreckt, platzierbar und führbar sind.

14. Produktpräsentationsvorrichtung (1) nach einem der vorangehenden Ansprüche, wobei die Produktführungsstruktur (8a-8f) zum Bewegen eines Gegenstands (10a-10o) oder mehrerer Gegenstände (10a-10o) hin zum vorderen Rand (11) der Ablagestruktur (7) ausgebildet ist.

15. Produktpräsentationsvorrichtung (1) nach einem der vorangehenden Ansprüche, wobei die Produktführungsstruktur (8a-8f) durch einen Führungsschacht gebildet ist, der benachbart zum hinteren Rand (12) der Ablagestruktur (7) offen ist.
